# EUROPEAN PATENT SPECIFICATION

(11) **EP 0 290 693 B1**
(45) Date of publication and mention of the grant of the patent: **11.08.1993**
(21) Application number: 87304310.3
(22) Date of filing: 14.05.1987
(51) Int. Cl.: B23B 9/00

(54) **Multi-spindle chucking machine**
Mehrspindel-Futter-Drehautomat
Tour automatique multibroche à mandrin

(43) Date of publication of application: 17.11.1988
(73) Proprietor: HOFER-TECH CORPORATION, Burlington, Ontario L7L 5P8 (CA)
(72) Inventor: Eichenhofer, Josef, Brampton Ontario, L6W 2T8 (CA); Schubert, Karl P., Cleveland Ohio 44124 (US)
(74) Representative: Klunker . Schmitt-Nilson . Hirsch

(56) References cited:
- EP-A- 0 113 997
- DE-A- 1 752 738
- DE-A- 2 264 899
- DE-A- 3 001 390
- DE-B- 1 477 880
- GB-A- 1 263 135
- US-A- 1 829 284
- US-A- 3 063 131
- US-A- 3 339 440

## Description

This invention relates generally to machine tools and is concerned more particularly with machine tools of the type known as "multi-spindle chucking machines", as defined in the precharacterising portion of claim 1, see DE-A-3 001 390.

A machine tool of this type includes a series of driven rotary spindles, each provided with a chunk or other device in which a workpiece can be held and presented to a stationary tool for machining. Multi-spindle machines are particularly useful where multiple machining operations are required to be performed on each of a succession of similar workpieces. A typical example of such a requirement is in the manufacture of automotive disc brake rotors, where each of a succession of cast rotor blanks must be machined at different speeds in forming the finished rotor.

A typical prior art multi-spindle chucking machine for use in the manufacture of disc brake rotors includes a series of rotary spindles (typically two or three) mounted parallel to one another in a carrier and each provided at one end with a chunk which protrudes from the carrier for carrying a rotor blank to be machined. The spindles are driven at different but fixed speeds from a single drive motor through a mechanical gear transmission which allows the carrier to be indexed to present each blank to successive tools for machining at different speeds. The carrier is of generally cylindrical shape overall and is supported at its periphery in large diameter annular bearings which encircle the carrier. A splined locking arrangement is provided for retaining the carrier in a position to which it has been indexed.

Prior art machines of this type suffer from a number of disadvantages. For example, the fact that the spindles are driven at fixed speeds restricts the versatility of the machine. In some cases, it would be desirable to be able to vary the machining speed, for example, to take advantage of different cutting tools and/or to be able to accommodate different workpieces, e.g. disc brake rotors for different model cars. The fixed gear transmission arrangements of the prior art make this practically impossible.

Another disadvantage is that the large annular bearings required to support the carrier are extremely expensive. Not only does this make the initial capital cost of the machine high, but maintenance costs are high because the bearings tend to wear out. A related difficulty is that the bearing tolerances must be held to within fine limits because any radial movement of the carrier will have a detrimental effect on the accuracy of machining. These close tolerances in turn make the bearings vulnerable to ambient temperature variations which, in some circumstances, can cause the tolerances to diminish to the point at which the carrier becomes extremely difficult to index. This, in turn, means that high power capacity drives must be used in the indexing mechanism. A still further disadvantage is that the splined locking mechanism conventionally provided for the carrier of prior art multi-spindle chucking machines is extremely costly to manufacture and vulnerable to wear and jamming due to the presence of workpiece chips and other debris inevitably encountered in a production machine shop environment.

DE-A-3001390 discloses a machine tool comprising a frame, a plurality of spindles each rotatable about an axis and each including workpiece holding means at a first end of the spindle, a carrier supporting said spindles in axially parallel positions with said workpiece holding means accessible at a first end of the carrier, means for indexing the carrier about an axis parallel to said spindle axes to move the spindles between defined stations, spindle drive means supported by said frame adjacent a second end of the carrier and including a number of individual spindle drive motors each disposed in a fixed position aligned with one of said stations, clutch means comprising respective driven clutch members at a second end of each said spindle and co-operable driving clutch member means drivable coupled to each spindle drive motor, said clutch means being operable drivingly to couple each spindle drive motor to the relevant one of said spindles when the carrier has been indexed to bring that spindle to a said station at which a machining operation is to be performed, and being disengageable to permit indexing of the carrier.

The present invention provides improved accessibility for the chuck operating means, by the features set out in the characterising clause of Claim 1.

Examples of the invention will now be described with reference to the accompanying drawings in which:-
Fig. 1 is a perspective view from one end of a multi-spindle chucking machine in accordance with the invention;
Fig. 2 is a perspective view of the machine shown in Fig. 1, taken from the same side and the opposite end;
Fig. 3 is a partly exploded perspective view generally of the centre portion of the machine as seen in Fig. 2;
Fig. 4 is a detail plan view in the direction of arrow 4 in Fig. 3;
Fig. 5 is a sectional view on line 5-5 of Fig. 4;
Figs. 6 and 7 are sectional views on line 6-6 and 7-7 respectively of Fig. 1;
Fig. 8 is a vertical sectional view through part of the drive transmission in a typical one of the spindles of the machine and may be considered as an extension of the left hand end of Fig. 7;
Fig. 9 is a sectional view on line 9-9 of Fig. 1;
Fig. 10 is an elevational view, partly in section, showin the drive coupling between a typical one of the drive motors of the machine and a typical spindle transmission, and may be regarded as a continuation of the left hand end of Fig. 8;
Figs. 11 and 12 are sectional views on lines 11-11 and 12-12 respectively of Fig. 10;
Fig. 13 is an elevational view, partly in section, of an alternative form of spindle drive arrangement;
Figs. 14, 15 and 17 are partial longitudinal sectional view similar to Fig. 13 illustrating three alternative forms of clutch arrangement that may be employed in the machine;
Fig. 16 is a partial elevational view of one of the components of the clutch of Fig. 15;
Figs. 18a and 18b are somewhat similar views of components of the clutch of Fig. 17;
Figs. 19 and 20 are partial longitudinal sectional views through an alternative form of spindle assembly that may be used in the machine, the assembly being shown in two alternative positions in the respective views;
Fig. 21 is a detail view in the direction of the arrow denoted 21 in Fig. 19;
Fig. 22 is an enlarged detail view of part of the spindle assembly shown in Figs. 19 and 20;
Fig. 23 is a plan view in the direction of the arrow denoted 23 in Fig. 22;
Fig. 24 is a vertical sectional view on line 24-24 of Fig. 22;
Fig. 25 is a partial longitudinal sectional view through a further alternative form of spindle assembly; and,
Fig. 26 is a partial longitudinal sectional view of part of Fig. 25.

### DESCRIPTION OF THE PREFERRED EMBODIMENTS

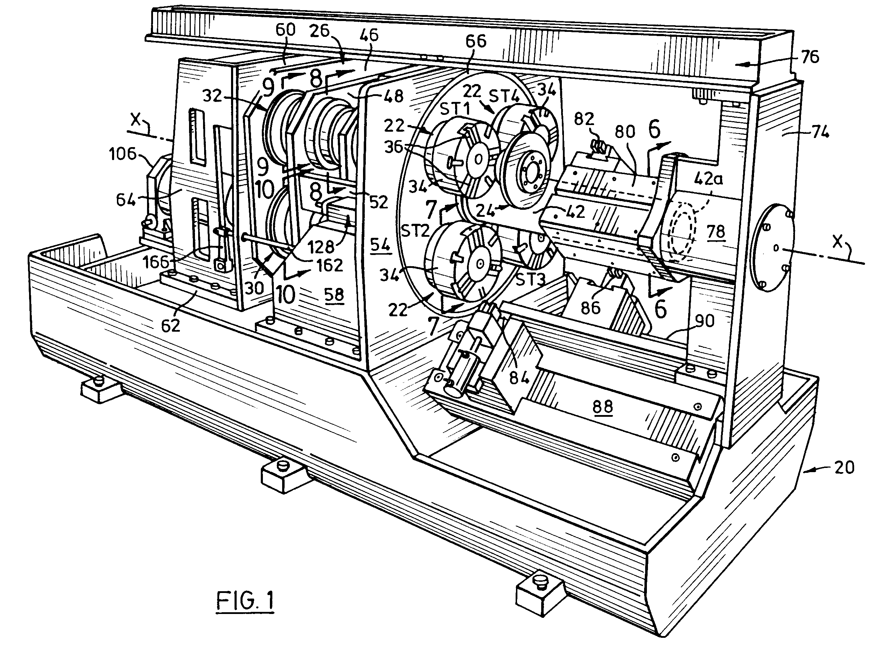

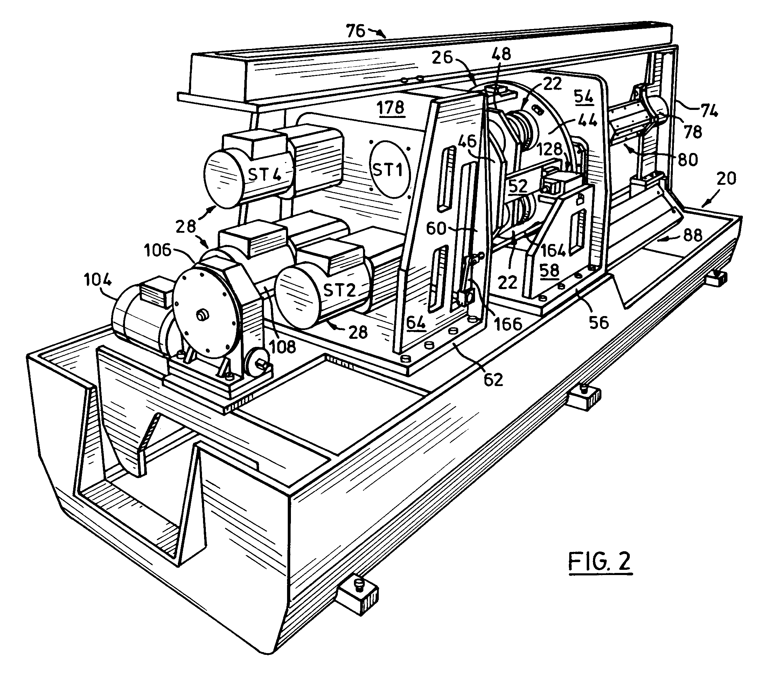

Referring to the drawings, Figs. 1 and 2 may be taken as respectively front and rear perspective views of the machine, in that Fig. 1 best shows the part of the machine at which machining operations will be performed while Fig. 2 shows the opposite end of the machine including the spindle drives and indexing arrangement (all of which will normally be concealed from view by a cover-not shown). The frame of the machine is generally indicated by reference numeral 20 and the spindles (which are largely concealed in those views) are denoted 22. A typical workpiece in the form of a disc brake rotor blank is shown at 24 in Fig. 1, in position preparatory to loading into one of the spindles. A carrier supporting the spindles is denoted 26.

Three spindle drive motors are visible in Fig. 2 and are denoted individually by reference numeral 28. The motors are all identical electric infinitely variable speed motors sold under the trade mark FANUC by Fujitsu of Japan. As best seen in Fig. 1, the machine, in fact, includes four spindles 22 although only three of the spindles are driven at any one time; the first spindle remains stationary for loading while machining operations can be performed on workpieces carried by the other three (driven) spindles. Carrier 26 is indexed (as will be described) to move the spindles successively through four stations (three machining stations and one loading station). For ease of reference, in Fig. 1 the four stations have been marked as ST 1 to ST 4. Station ST 1 is the loading station whereas ST 2 to ST 4 are machining stations.

The four spindles are identical and are indexed successively through all four stations by turning carrier 26. The three spindle drive motors 28 are aligned with the spindles at stations ST 2, ST 3 and ST 4 and are correspondingly marked in Fig. 2. The motors 28 remain stationary as carrier 26 is indexed and electrically operated clutches provide a drive coupling between the three spindles at stations ST 2, ST 3 and ST 4 and the three drive motors 28 during machining. The clutches are de-energized during indexing of carrier 26. The clutches will be described in more detail later. For present purposes, it is sufficient to note that part of one of the clutches at station ST 2 is visible at 30 in Fig. 1 and that similar clutches are provided at stations ST 3 and ST 4. A brake unit 32 is provided for the spindle which is in position ST 1 and is operable to hold that unit stationary for loading and unloading of a workpiece.

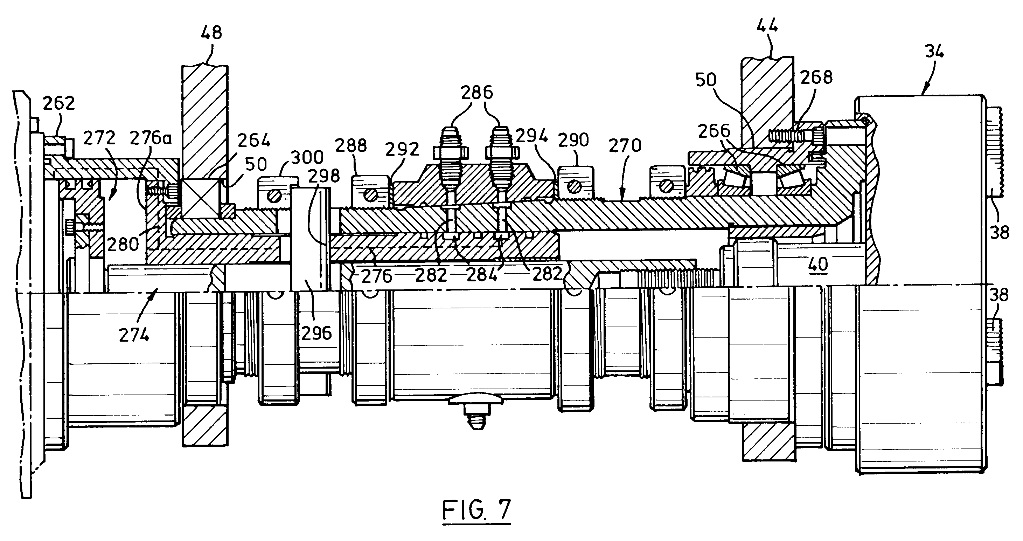

Each spindle extends from the position of the relevant clutch (as clutch 30) or brake unit 32 as the case may be to a chuck assembly which is exposed at the right hand end of carrier 26 as it is seen in Fig. 1. The chuck assemblies for all four spindles are essentially identical and are denoted by reference numeral 34. The chucks themselves are essentially conventional hydraulically operated units having guideways 36 on their outer faces for receiving jaws for clamping the workpiece. The jaws have not been shown in Fig. 1 but two typical jaws are shown at 38 in Fig. 7. In view of their essentially conventional form, the chuck assemblies have not been shown in detail. A chuck operating piston is indicated at 40 in Fig. 7 within the spindle and is displaced longitudinally to operate the jaws, as will be described in more detail later.

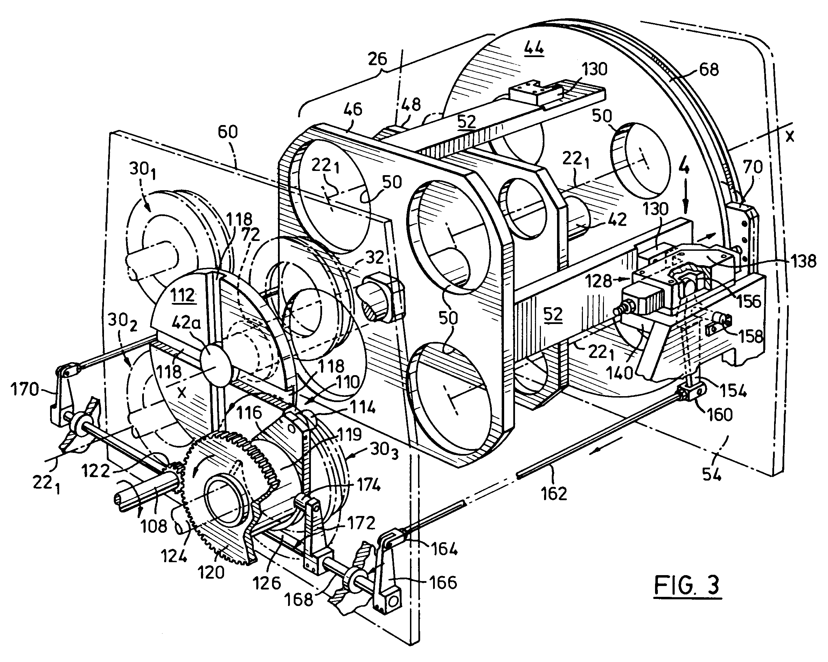

It will be apparent from a review of Figs. 1 and 7 that the spindles 22 are generally of elongate cylindrical shape overall. The spindles are supported in carrier 26 in axially parallel positions with the chuck assemblies exposed at one end (the "front" end) of the carrier. Fig. 3 shows some detail of the carrier construction; in that view, the spindles themselves have been omitted for clarity of illustration but their rotational axes are indicated by chain dotted lines at 22₁. The rotational axis of the carrier itself is parallel to the axes 22₁ and is indicated at X-X in Figs. 1 and 3.

Carrier 26 includes a central shaft 42 which is disposed on axis X-X and supported in bearings at its ends (see later). In Fig. 3, only part of the shaft 42 is in fact visible; the left hand end of the shaft as drawn is indicated at 42a while the shaft extends further to the right than shown. Welded to shaft 42 in planes generally normal to axis X-X are respective first and second carrier end plates 44 and 46, and an intermediate plate 48. These plates are formed with aligned holes, some of which are denoted 50, for receiving the spindles 22. The spindles are secured to the plates 44, 46 and 48 so that the spindles can rotate with respect to the plates. The plates 44, 46 and 48 are maintained parallel to one another by longitudinal bars, two of which are shown at 52 in Fig. 3 although four such bars are in fact provided at positions spaced 90 degrees from one another about axis X-X. The bars 52 are welded to the carrier plates 44, 46 and 48 to form a rigid welded carrier structure.

The plates 46 and 48 are made from square steel plate with the corners removed, while the first end plate 44 is circular. One face of plate 44 is exposed at the front of the machine as best seen in Fig. 1. Plate 44 is located in a circular opening in a further plate 54 which forms part of the frame 20 of the machine. It will be seen from Fig. 1 that plate 54 is in fact welded to a horizontal plate 56 which is bolted to a bed of the machine frame. The two plates 54 and 56 are braced by welded gusset plates, one of which is visible at 58 in Figs. 1 and 2. A second plate 60 similar to plate 54 is provided at a slight spacing from the rear (left hand) end of carrier 26 as seen in Fig. 1 and is similarly welded to a horizontal plate 62 bolted to the machine bed and braced to plate 60 by two side gussets 64 (see also Fig. 2). Thus, plate 60 essentially forms part of the frame of the machine. This plate rotatably supports the rear end of the main carrier shaft 42 as will be described.

Referring back to Fig. 1, the circular end plate 44 of the carrier is a clearance fit in a complementary circular opening in plate 54. The narrow annular gap between the two plates 44 and 54 is covered by a flexible seal 66 designed to prevent workpiece chips and other debris passing through the gap. As noted previously the machine is provided with a cover which is not shown in Fig. 1. This cover fits around the side and top edges of plate 54 and encloses the parts of a machine behind the plate 54. These parts are accordingly well protected against ingress of debris.

Referring back to Fig. 3, it will be seen that the circular carrier end plate 44 is provided with a peripheral groove 68 rearwardly of plate 54 (plate 54 is shown in ghost outline in Fig. 3). This groove receives a pair of thrust bearing pads at diametrically opposite sides of plate 44, one of which is shown at 70. These pads are adjustably bolted to the rear face of plate 54 and fit closely within the groove 68 so as to resist axial thrust imposed on the carrier during machining. It should be noted that these pads do not rotationally support the carrier. The carrier is rotationally supported solely by way of its central shaft 42 as discussed previously.

The left hand (rear) end of shaft 42 as shown in Fig. 3 is supported by the plate 60 which essentially forms part of the machine frame as described above. In Fig. 3, that plate is shown in ghost outline and it will be seen that shaft 42 extends through plate 60 and is supported by a bearing indicated at 72 mounted on the rear side of plate 60 (the side remote from carrier 26). Shaft 42 then extends forwardly through the plates 46, 48 and 44 and projects outwardly from the front face of plate 44 as best seen in Fig. 1. In that view, the front end face of shaft 42 is shown in dotted outline at 42a. This end of the shaft is rotatably supported by bearings in a support column 74 which again forms part of the frame 20 of the machine. Column 74 and the main frame plates 54 and 60 are braced with respect to one another by a horizontal beam 76 which extends longitudinally of the machine from end to end thereof. This form of frame construction imparts great rigidity to the machine which maximizes accuracy of machining.

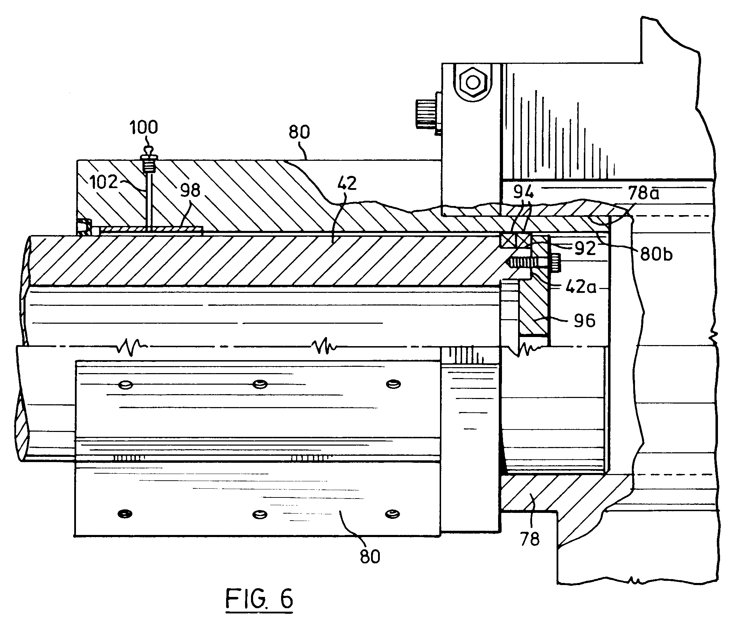

In any event, referring back to shaft 42, Fig. 6 shows the front end portion of shaft 42 in section and illustrates the manner in which the shaft is rotationally coupled to column 74. It will be seen from Figs. 1 and 6 that the column is shaped to provide a hub 78 into which shaft 42 extends. Adjacent hub 78, shaft 42 also passes through a tool rest 80 for supporting stationary cutting tools such as the tool shown at 82 in Fig. 1. Other tools are shown at 84 and 86 supported upon tool holders 88 and 90 carried by the frame of the machine. The tools shown are for illustration purposes only and are not intended to be accurate representations of actual tools. Conventional tools and tool actuating devices will be used to position and feed the tools into workpieces carried by the spindles.

Returning to a consideration of Fig. 6, tool holder 80 is formed with a cylindrical projection 80a at its end adjacent the support column hub 78 and this projection is received in a complementary recess 78a in hub 78. Tool rest 80 has an internal bore 80b which receives the shaft 42. At its extreme forward end 42a, shaft 42 is provided with an annular rebate 92, which receives a pair of roller bearings 94 arranged to ride on the internal surface of bore 80b. A bearing retainer 96 is bolted to the end of shaft 42.

Adjacent its opposite end, the tool rest 80 is supported on shaft 42 by way of a bushing 98 and a grease nipple 100 and corresponding bore 102 are provided for lubricating the interface between shaft 42 and tool rest 80.

In this way, the forward end of shaft 42 is rotationally supported by relatively small diameter bearings without the need for the large and costly annular bearings of the prior art. At its opposite end shaft 42 is similarly supported by the relatively small diameter bearing 72 on frame plate 60 of the machine. In summary, the carrier is supported solely by its main central shaft 42, which shaft is carried at ends in bearings supported from the frame of the machine.

Indexing of carrier 26 is accomplished by a Geneva cam mechanism driven from a motor drive at the rear of the machine. Referring to Fig. 2, the carrier indexing drive motor is an electric motor denoted 104 which is coupled to a worm drive gear box 106 having an output shaft 108 extending generally longitudinally of the machine. Shaft 108 is also shown at the left hand end of Fig. 3. Drive is transmitted from shaft 108 to the main central shaft 42 of the carrier by way of a Geneva cam mechanism 110. This mechanism includes a hub 112 which is secured to the rear end portion of shaft 42 and a cam follower 114 carried by an arm 116. Follower 114 engages successively in each of four radial cam tracks 118 in the rear face of hub 112. Follower 114 circulates continuously (while motor 104 is operating) in a circular path indicated at 114a in Fig. 3. If motor 104 continues to operate, cam follower 114 will successively enter each of the tracks 118 and will intermittently turn hub 112 and with it, the carrier 26 through a 90 degree increment as follower 114 moves along the relevant track and displaces hub 112 clockwise as drawn. The arm 116 which carries the cam follower 114 is coupled by a collar 119 to a spur gear 120 which meshes with a smaller gear 122 on the drive shaft 108 from motor 104. Motor 104 will of course be controlled by the control system of the machine to index the carrier in accordance with the particular sequence of operations required of the machine.

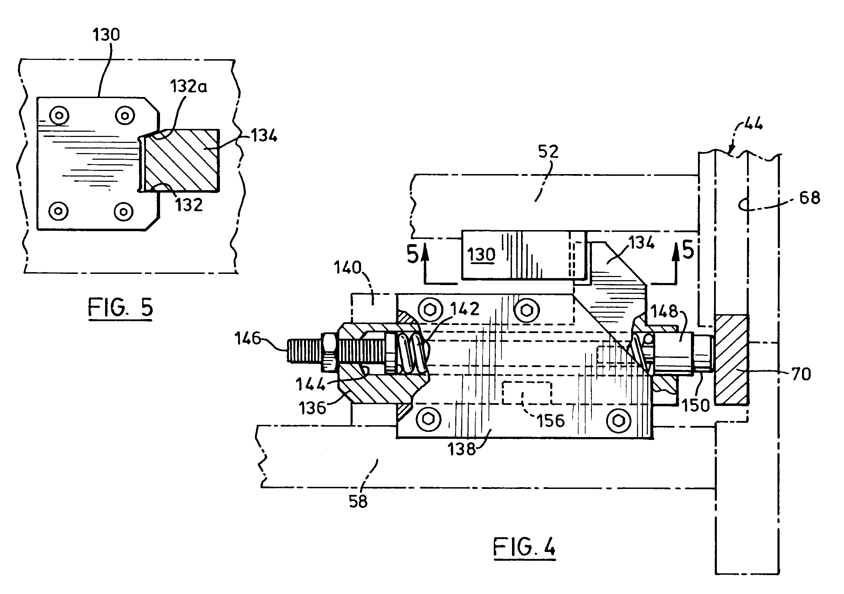

The Geneva cam follower assembly 114, 116 and its driving gear 120 are mounted co-axially on a shaft indicated in ghost outline at 124 which is driven by the spindle drive motor 28 at station ST 2 as will be described later. The arrangement is such that the gear 120 and the cam follower assembly 114, 116 can turn independently of shaft 124. Also mounted on arm 116 to turn about the axis of shaft 124 is an arcuate cam segment 126 which is used to operate mechanisms for latching the carrier in a position to which it has been indexed. One of these latching mechanisms is generally denoted by reference numeral 128 in Fig. 3 and an identical mechanism is provided at the opposite side of the carrier but is not visible in Fig. 3. The latching mechanisms 128 cooperate with latch blocks 130 mounted one on each of the four longitudinal bars 52 of the carrier structure. In Fig. 3, mechanism 128 is shown engaged with one of these latch blocks 130 and a similar latch block is shown on the bar 52 which appears at the top in Fig. 3. Details of mechanism 128 and a typical one of the latch blocks are shown in Figs. 4 and 5.

Referring first to Fig. 5, it will be seen that the latch block 130 has a slot 132 in one face and that one lateral wall of the slot is bevelled as indicated at 132a. A latch bolt 134, part of which is visible in Fig. 5, is shaped to engage in slot 132 and has a corresponding level; bolt 134 is dimensioned to wedge into the slot before becoming fully seated therein. Latch bolt 134 extends laterally from a slide member 136 (Fig. 4) mounted to slide longitudinally in a housing 138 bolted to the frame of the machine. Referring back to Fig. 3, it will be seen that this is accomplished by bolting housing 138 to a lateral "shelf" 140 carried by one of the gusset plates 58 referred to above.

A helical compression spring 142 is located in a bore 144 in member 136 and acts between the head of an adjustment bolt 146 which is threaded into an opening in one end of member 136 and projects outwardly therefrom, and a plunger 148 at the opposite end of bore 144. Plunger 148 is a free sliding fit in bore 144 and bears against the thrust pad 70 of the carrier (see Fig. 3).

Fig. 4 shows the latching mechanism in the position in which carrier 26 has been latched and is held stationary as for machining. Spring 142 is calibrated to hold the latch bolt 134 in engagement with the latch block at this time. Unlatching is effected by displacing slide member 136 to the right in Fig. 4, thereby effectively compressing spring 142, which consequently provides a spring biased latching force. Bolt 146 is adjustable to vary to spring biasing effect and is provided with a lock nut 152.

This unlatching movement of member 136 to the right in Fig. 4 is effected automatically from the cam follower segment 126 referred to previously and discussed in connection with Fig. 3. Referring back to that view, a latch release lever 154 extends upwardly into the latching mechanism and is received at its upper end in a recess 156 in slide member 136 (recess 156 is also shown in Fig. 4). Lever 154 is pivoted on a pivot shaft 158. At its lower end, lever 154 is fitted with a yoke 160 coupled to a pull rod 162 which extends rearwardly of the machine and which is coupled at its rearward end by a further yoke 164 to the upper end of a lever 166. That lever is itself carried by a cross shaft 168 which extends to the far side of the machine as seen in Fig. 3, where it is provided with asimilar lever 170 for operating the latching mechanism at the other side of carrier 26.

Adjacent cam segment 126, shaft 168 carries with a further lever 172 which supports a cam follower 174 arranged to engage the cam segment 126. Thus, when follower 174 rides up segment 126, all three levers 172, 166 and 170 will pivot so that their upper ends move rearwardly, exerting a pull on the pull rod 162 and on the corresponding rod at the opposite side of the machine, and releasing both latch mechanisms. Cam segment 126 is positioned to release the latch mechanisms just before the Geneva cam follower 116 enters the Geneva hub cam track 118 and begins to rotate the carrier. Conversely, after carrier indexing has been completed, follower 174 will leave the cam segment 126 and the latch mechanisms will re-engage by virtue of their internal spring biasing. The bevels 132a in the latch block slot and the corresponding bevel on the latch bolt will ensure positive location of the carrier even if some initial misalignment should occur.

Reference will now be made to Figs. 7 to 12 in describing a typical one of the spindles 22 of the machine and the manner in which the spindles are driven at positions ST 2, 3 and 4 of the machine.

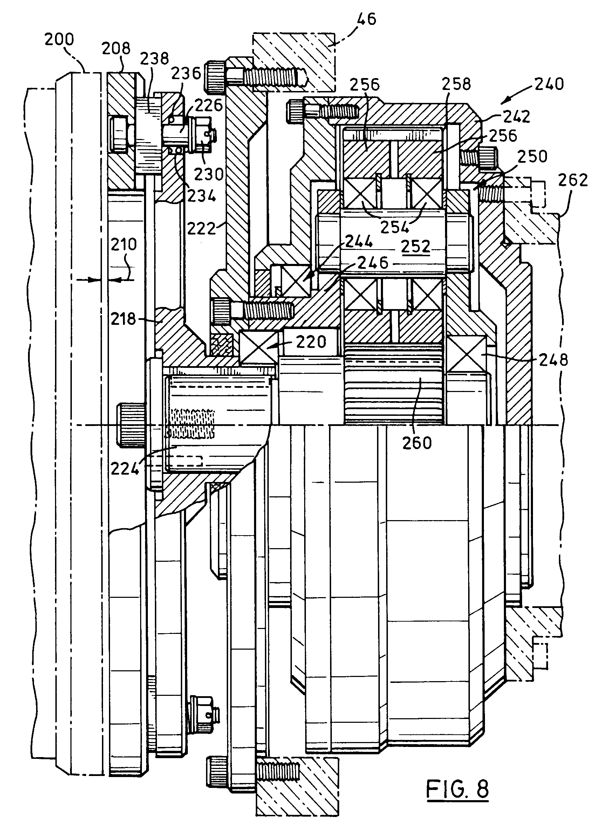

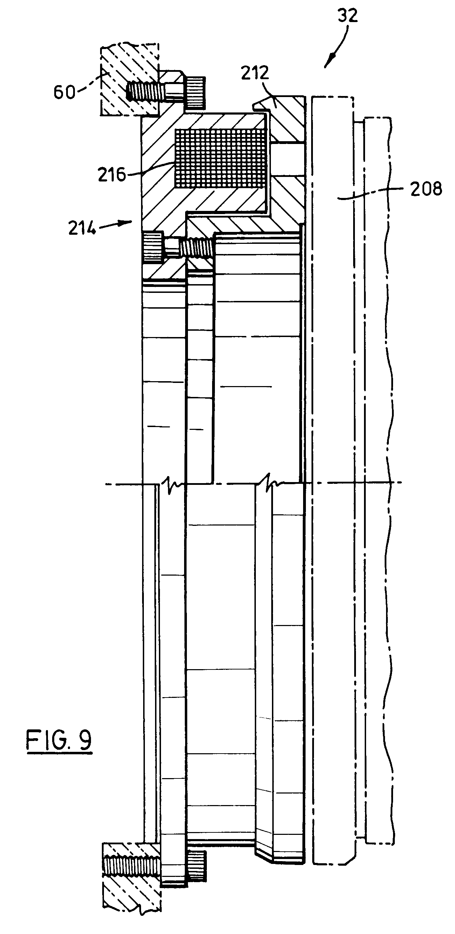

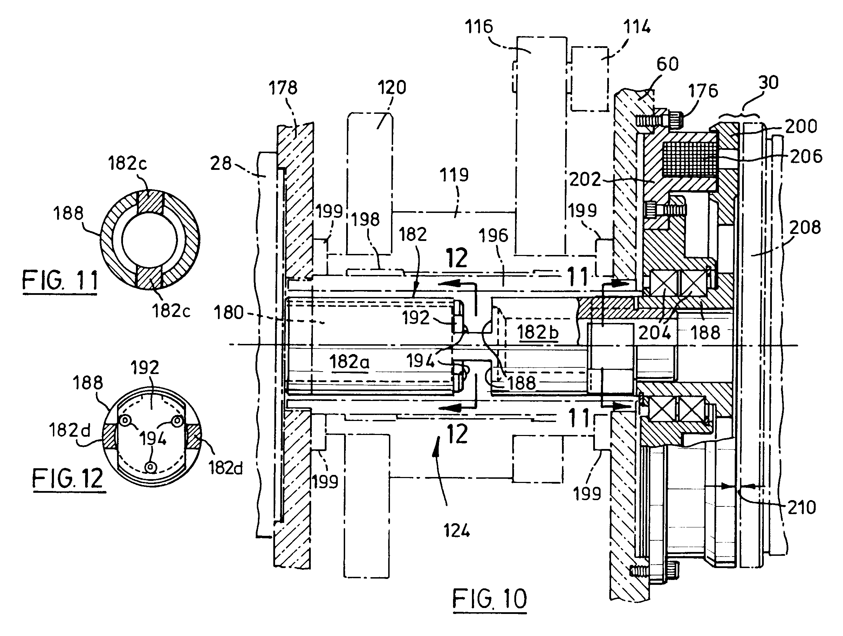

For clarity of illustration, various parts of the spindle 22 are shown in different views of the drawings. Fig. 7 shows the main body of the spindle. Fig. 8 shows a transmission arrangement which is incorporated in the spindle and may be considered as a continuation of the left hand end of Fig. 7; part of a typical one of the clutches (as clutch 30) is also shown in ghost outline in Fig. 8, Fig. 9 shows the brake 32 used at position ST 1. Fig. 10 shows the coupling between one of the clutches (as clutch 30) and a typical one of a spindle drive motors 28. Figs. 11 and 12 show details of Fig. 10.

As noted previously, the machine includes three clutches disposed at the positions of stations ST 2, ST 3 and ST 4 respectively and one brake at the position of station ST 1. In Fig. 3 the three clutches and the brake are shown in ghost outline in the positions they would occupy in practice. The brake is denoted 32 and the three clutches are denoted respectively 30₁, 30₂ and 30₃. Each clutch is shown having an associated drive shaft from the relevant spindle motor 28. One of these shafts is the shaft 124 referred to previously as supporting the Geneva cam follower of 116, its drive gear 120 and the intervening collar 119. These latter components are shown in ghost outline in Fig. 10 and it will be seen from that view that the shaft referred to as shaft 124 in Fig. 3, in fact, comprises a shaft assembly providing means for coupling the relevant spindle drive motor 28 to the associated clutch 30. It will, of course, be understood that arm 116, collar 119 and gear 120 appear only at position ST 2 (see Fig. 3) although the shaft assembly 124 may be considered to be typical of the shaft assemblies associated with each of the three drive motors 28 and the associated clutches 30.

Referring first to Fig. 10, it will be seen that clutch 30 is bolted to the vertical plate 60 discussed above which essentially forms part of the frame of the machine. Two typical attachment bolts are shown as 176 in Fig. 10. A second vertical plate denoted 178 extends parallel to plate 60 between the side plates 64 (see Figs. 1 and 2). As best seen in Fig. 2, plate 178 carries the spindle drive motors 28. The motors are secured to the plate by bolts (not shown). Referring back to Fig. 10, part of a typical one of the drive motors is shown at 28 in position adjacent plate 178. A motor drive shaft 180 extends forwardly through an opening in plate 178 and is shown in dotted outline at in Fig. 10. An inner portion 182a of a drive transmitting sleeve 182 encloses the motor drive shaft 180 and is keyed thereto as indicated at 186. The sleeve also includes an outer portion 182b shaped to define a part of lugs 182c (Fig. 11) which key to an input shaft 188 of clutch 30.

Intermediate the sleeve portions 182a and 182b, transverse slots are cut in the sleeve leaving a pair of lands 182d, as best seen in Fig. 12. An end cap 192 fits between these lands and is secured to the end face of the motor drive shaft 180 by bolts 194. Shaft assembly 124 is housed within a sleeve indicated in ghost outline at 196 which extends between and is received at its ends in openings in the plates 60 and 178 respectively. Sleeve 196 rotationally supports the Geneva cam follower arm 116, the spur gear 120, and the intermediate sleeve 119 by way of bearings 198. Spacers 199 locate these components between plates 60 and 178.

Each of the clutches 30 and the brake 32 is essentially a conventional electromagnetic unit. In Fig. 10, a driving plate of clutch 30 is denoted 200 and is coupled to the clutch input shaft 188 and rotationally supported with respect to a stationary part 202 of the clutch by bearings 204. Part 202 is bolted to plate 60 to plate 60 by the bolts 176 mentioned previously. An electromagnetic coil in stationary part 202 is shown at 206. A driven clutch plate shown in ghost outline at 208 in Fig. 10 is carried at the rear end of each of the spindles 22. The two plates 200 and 208 and the carrier 26 are designed so that, the carrier is indexed, the driven clutch plates 208 carried by the respective spindles move exactly parallel to one another, to the outer faces of the clutch driving plates (as plate 200) and to the corresponding plate of brake 32, so that a very narrow clearance gap 210 exists between the opposing faces of the respective clutch plates when the clutch is in its de-energized state. When the clutch is energized, the magnetic field generated within the stationary part 202 of the clutch draws the driven clutch plate 208 into tight driving engagement with the plate 200 so the drive is transmitted to the spindle.

Brake 32 (Fig. 9) operates in essentially the same fashion except in that the equivalent of the driving clutch plate 200 of Fig. 10 is stationary and there is no motor and shaft assembly associated with the brake. The equivalent of the clutch driving plate 200 is denoted 212 in Fig. 9 and comprises a generally annular plate bolted to a stationary component 214 of the clutch which is itself bolted to the plate 60 carried by the machine frame. An electromagnetic coil housed within component 214 is shown at 216. When the brake is energized, a magnetic field is produced which draws the driven plate 208 of the relevant spindle tightly against the plate 212 of the brake in essentially similar fashion to the way in clutch 30, except that the spindle plate 208 is held stationary instead of being driven.

Fig. 8 shows the driven spindle plate 208 (hereinafter called a clutch plate) partly in section and positioned at a spacing 210 from the end face of a plate which is denoted 200 in Fig. 8 to represent the clutch plate 200 of Fig. 10 but which may, in fact, be part of the brake 32 depending on which of the machine operating stations is being considered. Plate 208 is supported by a backing plate 218 which is in itself rotationally supported by a bearing 220 with respect to the carrier rearend plate, part of which is indicated at 46 in Fig. 8. The outer race of bearing 220 is, in fact, carried by a fixed plate 222 which is bolted to carrier end plate 46. The backing plate 218 is keyed to a central shaft 224 carried by the inner race of bearing 220.

Clutch plate 208 is supported with respect to the backing plate 218 by a series of bolts which are spaced around the peripheries of the respective plates and two of which are indicated at 226 and 228 in Fig. 8. Bolt 226, which may be taken as typical of all the bolts, extends forward (of the machine) from plate 208 through an opening in plate 218 and is fitted at its forward end with a nut 230 backed by a washer 232 and a helical compression spring 234 which acts between the washer 232 and the bottom of a recess 236 in plate 218. A spacer 238 carried by bolt 226 maintains a minimum spacing between the backing plate 218 and the clutch driven plate 208 but the springs, as spring 236, allow the plate 208 to move towards plate 200 (or plate 212), closing gap 210, when the clutch or brake as the case may be is operated. At the same time, the springs (as spring 236) provide a biasing force for retracting plate 208 and providing the required clearance 210 when the clutch or brake is de-energized.

In the illustrated embodiment, each of the spindles 22 incorporates a planetary gear-type transmission desgined to "gear down" the speed of the motor so that the chuck of each spindle rotates at a speed less than the motor speed. In the particular application for which the machine being described was designed, it is desirable to maintain the speed of the drive motors at a relatively high speed (e.g. above 1200 RPM) to avoid loss in power when slow spindle machine speeds are required.

In Fig. 8, the transmission is generally denoted by reference numeral 240 and includes a generally drum-shaped casing 242 which rotates when the transmission is in operation and which is rotationally supported with respect to the carrier 46 by a bearing 244 running on a stationary planet gear carrier 246. As can be seen, carrier 246 is bolted to the fixed plate 222 supported by the carrier end plate 46. Carrier 246 is also rotationally supported with respect to the central shaft 224 by a further bearing 248. One of a series of three planet gears supported by carrier 246 is denoted 250. Gear 250 includes a stationary central shaft 252 which carries bearings 254 supporting a pair of gear wheels 256 which mesh both with an internal gear 258 inside casing 242 and an external gear 260 on shaft 224.

When the relevant spindle is engaged with one of the clutches 30, the clutch is energized and the associated drive motor is operating, drive is transmitted through the clutch to the clutch backing plate 218 which rotates and turns shaft 224. The shaft 252 of the planet gears 250 are stationary so that, as shaft 224 turns, the planet gears turn on their stationary shafts and transmit drive to the casing 242 of the transmission, which also turns. Shown in ghost outline at 262 is a part of the forward section of the spindle; part 262 is bolted to casing 242 and accordingly turns with the transmission casing. Part 262 is also visible in Fig. 7, which will now be described.

In Fig. 7, the chuck 34 of the spindle is shown at the right hand (forward) spindle end as discussed previously. Also shown are carrier end plate 44 and intermediate plate 48. The spindle is fitted into the openings 50 (Fig. 3) in these plates by a single bearing 264 in the case of plate 48 and by a pair of oppositely directed taper roller bearings 266 in the case of plate 44. This latter roller bearing arrangement assures axial positioning of the spindle. The outer races of the bearing 266 are carried by a support 268 which is bolted to carrier plate 44. The inner races of those bearings support a main cylindrical body member 270 of the spindle which rotates while the spindle is in use. That member 270 also carries the inner race of bearing 264 at the position of plate 48. At its rearward end, member 270 is coupled to the spindle part 262 which is bolted to the transmission casing as discussed prevously.

Part 262 is shaped to form a cylinder for a piston 272 used to operate the jaws of the chuck 34. Piston 272 is carried at one end of a piston rod 274 which extends longitudinally through the main spindle body 270 to the chuck operating piston 40 (discussed above) and which is in turn coupled to the jaws of the chuck. Piston rod 274 slides within a sleeve member 276 which is disposed inside the main spindle body member 270 and which has a flange 272a at its rearward end. Flange 276a is secured by screws, one of which is indicated at 278, to spindle part 262.

Hydraulic oil is delivered opposite sides of piston 272 for displacing the piston through passageways 280 in cylinder member 276 and part 262. Those passageways communicate with passageways 282 through the main spindle body member 270 and open into circumferential grooves 284 in that member. A bronze brush 286 encircles the body member 270 at the positions of these grooves and is fitted with hydraulic hose couplings 286. This member remains stationary while the spindle is rotating and is located axially by a pair of split nuts 288, 290 which encircle the body member 270 and are threaded onto the member. Bearing pads 292 and 294 are provided at opposite ends of the brush.

Sleeve member 276 couples spindle part 262 and spindle body member 270 by way of a pin 296 which extends diametrically through both members 270 and 276 and protrudes from both sides of the main body member. A clearance opening in piston rod 274 allows reciprocation thereof without contacting pin 296. At one side, the pin bears against an edge 298 of an opening in a cylinder member 276; its other side, its pin is contacted by a split nut 300 which is similar to the nuts 288 and 290 and which is threaded on to the main body member. When disassembly of the spindle is required, nut 300 is slackened, allowing pin 296 to be removed, which then allows the cylinder member 276 to be withdrawn from within body member 270 to the left in Fig. 7.

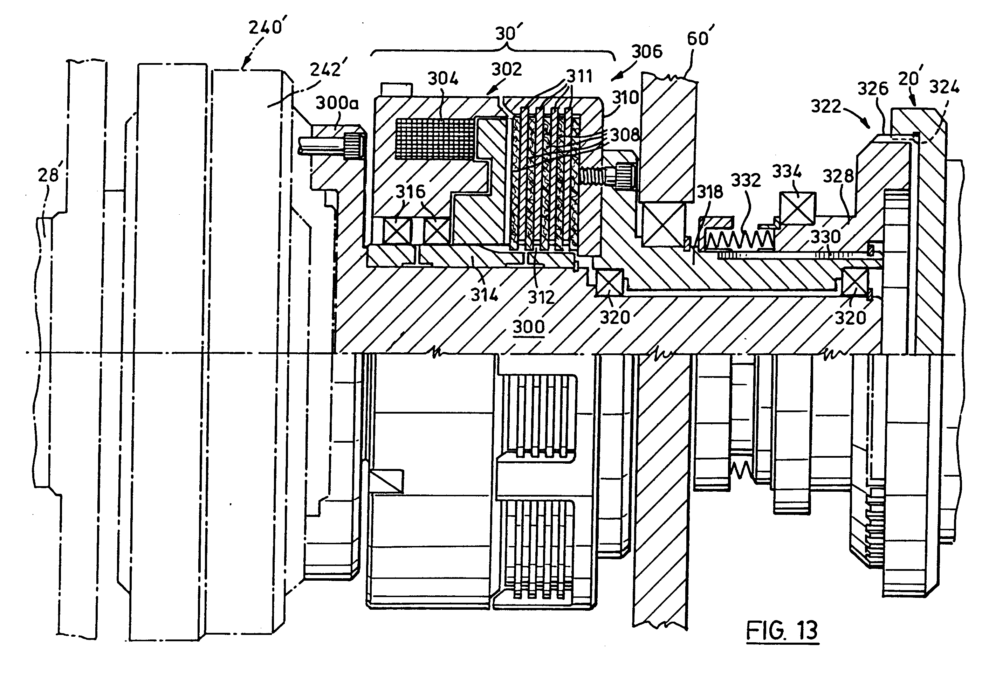

Fig. 13 illustrates an alternative form of spindle drive arrangement that may be used in place of the drive arrangement discussed previously. In Fig. 13, primed reference numerals have been used to denote parts which correspond with parts shown in previous use.

The drive management shown in Fig. 13 is designed for use primarily in applications in which extraordinarily high torque loads are generated. To accommodate these loads, a multi-plate clutch is employed in place of the single plate clutch previously described. In addition, the transmission between each drive motor and the associated chuck is coupled directly to the drive motor instead of being incorporated in the spindle as in the previous embodiment. This allows a larger and more robust transmission to be constructed than is possible where the transmission has to be incorporated within the spindle.

Referring now more specifically to Fig. 13, the multi-plate clutch is generally denoted by reference numeral 30ʹ and is shown positioned between a drive motor, part of which is shown in ghost outline and denoted 28ʹ, and a spindle of the machine, part of which is denoted 20ʹ. The spindle itself is the same as the spindle described previously except in that the drive transmission 240 (see e.g. Fig. 8) has been omitted from the spindle and, in effect, re-positioned between the drive motor 28ʹ and the multi-plate clutch 30ʹ. In Fig. 13, the transmission is shown in ghost outline at 240ʹ and is essentially the same as the transmission described previously except for its location. Thus, an input shaft of the transmission is driven by an output shaft of motor 28ʹ, neither of which are shown, and the transmission has a casing 242ʹ which it rotates at a speed related to the drive motor output shaft speed when the motor is in operation.

A transmission shaft 300 transmits drive from transmission 240ʹ and is coupled to the transmission casing 242ʹ by way of a flange 300a which is bolted to the casing. Clutch 30ʹ indicates a stationary part 302 which is coupled to the frame of the machine (not shown) and which includes a coil 304, and a movable part 306 which includes a series of annular clutch plates disposed parallel to one another within a housing 310. Alternate ones of those plates, denoted 308, are coupled to the central shaft 300 by a spline arrangement generally indicated at 312 and including a sleeve 314 secured to shaft 300, while the intervening plates 311 are coupled to housing 310. Bearings 316 rotationally support the stationary clutch part 302 on sleeve 314. Thus, the plates 308 rotate with the shaft 300 when the motor 28ʹ is running, while the intervening clutch plates 311 and the housing 310 remain stationary. When the coil 304 is energized the clutch plates 308 and 311 and housing 310 are drawn together and all rotate with the shaft 300.

Housing 310 is itself coupled to a further sleeve 318 which rotates on shaft 300 by way of bearings 320. A secondary, toothed clutch arrangement generally indicated at 322 is then provided for coupling sleeve 318 to the spindle 20ʹ. This clutch arrangement includes an annular internally toothed gear 324 on spindle 20 and a complimentary externally toothed gear 326 on the clutch member 328. Member 328 is coupled to sleeve 318 by splines 330 which allow the clutch member 328 to slide in the axial direction of shaft 300 to engage or disengage the teeth 324 and 326. Clutch member 328 is biased by springs 332 to normally maintain such engagement but the clutch member can be retracted against its spring biassing by an actuator (not shown) to disengage the transmission from the spindle and permit the carrier of the machine to be indexed at appropriate times. The actuator for the secondary clutch engages behind a bearing 334 on clutch member 328 and is coupled to the rod 162 for the carrier latching mechanism (best seen in Fig. 3). Thus, the actuator is arranged to release the secondary clutch 322 when the carrier latches are released and to permit the clutch to engage when the latches are engaged.

In this particular embodiment, clutch 30ʹ is a Siemens stationary field multiple disc clutch available from Siemens AG of West Germany.

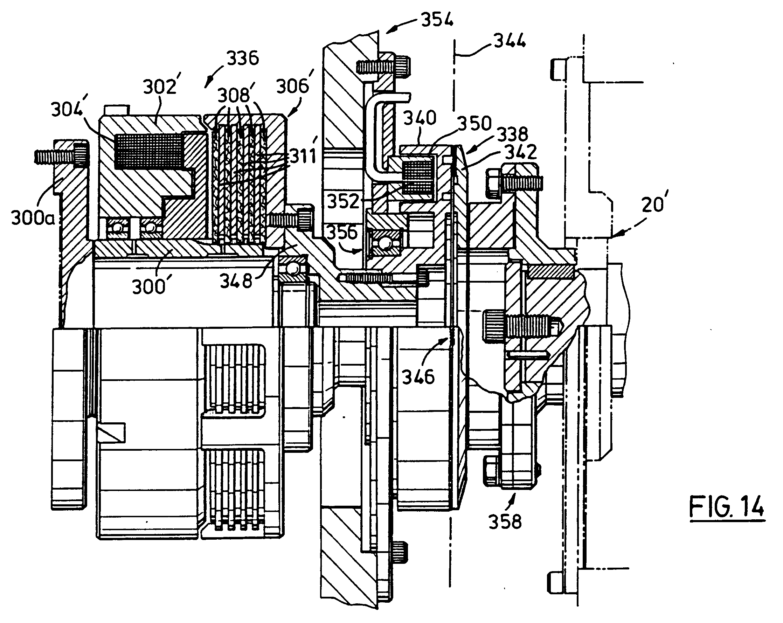

Reference will now be made to Figs. 14 to 18 in describing other alternative forms of clutch assembly that may be used in the machine described previously. Primed reference numerals are used in these views to denote parts that correspond with parts shown in previous views. As in the embodiment of Fig. 13, the embodiments to be described all employ a toothed clutch in combination with a friction clutch and are designed for use primarily in applications in which extraordinarily high torque loads are generated during machining. Also as in Fig. 13, the drive transmission is preferably coupled directly to the drive motor although this is not essential.

Referring first to Fig. 14, the friction clutch is generally denoted by reference numeral 336 and the toothed clutch by numeral 338. Clutch 336 has a stationary part 302ʹ which has a coil 304ʹ and a movable part 306ʹ that houses the clutch discs 308ʹ and 311ʹ. Alternate ones of the disc are splined to a central drive transmission shaft 300ʹ while the intervening discs are connected to a housing 310ʹ of the movable clutch part 306ʹ.

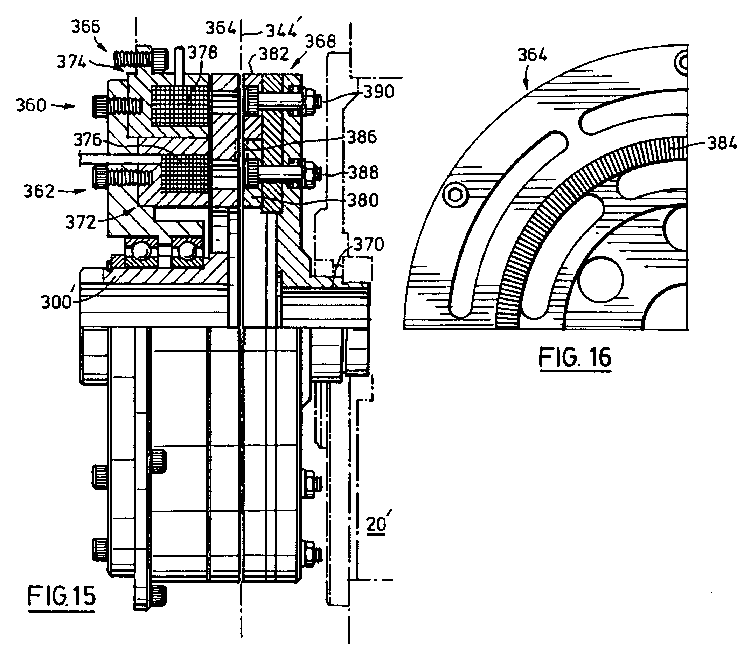

Clutch 338 includes respective clutch plates 340 and 342 which have opposed faces that meet in a common plane 344. This is the plane at which the clutch and spindle separate when the carrier of the machine is to be indexed. The opposing faces of the two clutch plates 340 and 342 have respective annular series of inter-engageable teeth which are generally indicated at 346. Fig. 16 shows a similar series of teeth of the clutch shown in Fig. 15; the teeth 346 will be essentially similar.

Clutch plate 340 is coupled to the movable part 306ʹ of clutch 336 by a hollow shaft 348. An annular recess 350 in the face of clutch plate 340 remote from its toothed face receives an annular coil 352 that is carried by a stationary housing 354 rotationally supported on shaft 348 by a bearing 356.

Clutch plate 342 is made of a ferromagnetic material and is mounted on a bracket 358 at the end of the spindle 20ʹ, for movement towards and away from clutch plate 340 over a distance just sufficient to permit the respective sets of teeth to clear one another for indexing of the spindle relative to the drive motor. Spring-loaded bolts such as those shown at 226 at Fig. 8 are used to couple the clutch plate 342 to the bracket 358 but have not been shown in Fig. 14.

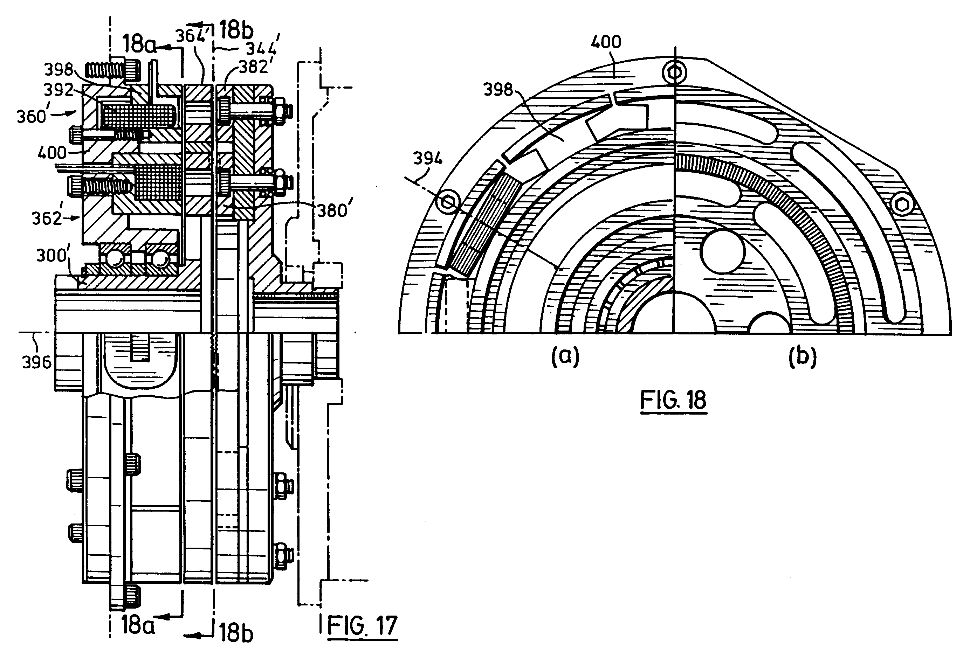

Turning now to the embodiments of Figs. 15 to 18, in these cases, the friction disc clutch and toothed clutch are in effect arranged concentrically one within the other. In Fig. 15, the friction disc clutch is denoted by reference numeral 360 while the toothed clutch is denoted 362. Corresponding primed reference numerals are used in Fig. 17. A clutch plate 364 carried by input shaft 300ʹ is positioned between a stationary clutch part 366 and a movable part 368 that is connected to the spindle 20ʹ by an output shaft 370. The stationary clutch part 366 carries respective inner and outer electromagnets 372 and 374 having respective coils 376 and 378. Both electromagnets are annular and magnet 372 is concentrically arranged with magnet 374.

The movable clutch part 368 includes concentric annular clutch plates 380 and 382 that correspond with the respective magnets. Plate 382 is a plain clutch plate having a flat outer face that engages the corresponding face of clutch plate 364 when electromagnet 374 is energized.

As shown in Fig. 16, clutch plate 364 is provided with an annular series of teeth 384 that co-operate with a correspondingly positioned, similar annular series of teeth 386 on clutch plate 380.

The respective clutch plates 380 and 382 are supported for movement towards and away from plate 364 by way of spring-loaded bolts 388 and 390 which are again similar to the bolts 226 shown in Fig. 8. The clutch plates 380 and 382 are made of ferromagnetic material so that they can be selectively drawn towards and frictionally engage the clutch plate 364 by energizing the respective electromagnets 372 and 374. The intention is that, when a drive motor is to be coupled to a particular spindle, electrogmagnet 374 will first be energized to draw plate 382 into driving engagement with plate 364 to in effect bring the spindle up to the motor speed. The toothed clutch 372 will then be engaged by energizing electromagnet 372 to in effect positively lock the drive motor to the spindle. It is anticipated that the toothed clutch should ensure continuity of drive even at extraordinarily high machining loads. At the same time, the friction clutch 360 will permit the drive to be taken up without the need to slow down the drive motor to an unacceptably low level. In other words, the speed of the drive motor can be kept up, which should enhance motor life.

The clutch arrangement shown in Figs. 17 and 18 is essentially very similar to that of Figs. 15 and 16 and again primed reference numerals have been used to denote corresponding parts. The primary difference between the two arrangements lies in that the electromagnet used in the friction clutch 360ʹ, instead of having a large annular winding extending about the longitudinal axis of the drive transmitting shaft 300ʹ, has a series of smaller windings that extend about respective axes that are disposed radially with respect to the longitudinally axis of shaft 300ʹ. One of these windings is shown at 392 in Fig. 18a extending about a radial axis 394 normal to the longitudinal axis 396 of shaft 300ʹ. A series of other similar windings will be wound onto radial armatures 398 (Fig. 18a) in a housing 400 forming a component of the stationary clutch part 366ʹ.

It is believed that windings of this form will have the advantage of reducing any tendency for magnetic interference between the two clutches. Thus, by providing individual windings of the form shown, it is believed that the magnetic flux lines emanating from the windings will be shaped so that they "capture" only the friction clutch plate 382ʹ. Clearly, it would be undesirable if the toothed clutch 362ʹ were accidentally engaged when the electromagnet for clutch 360ʹ were energized.

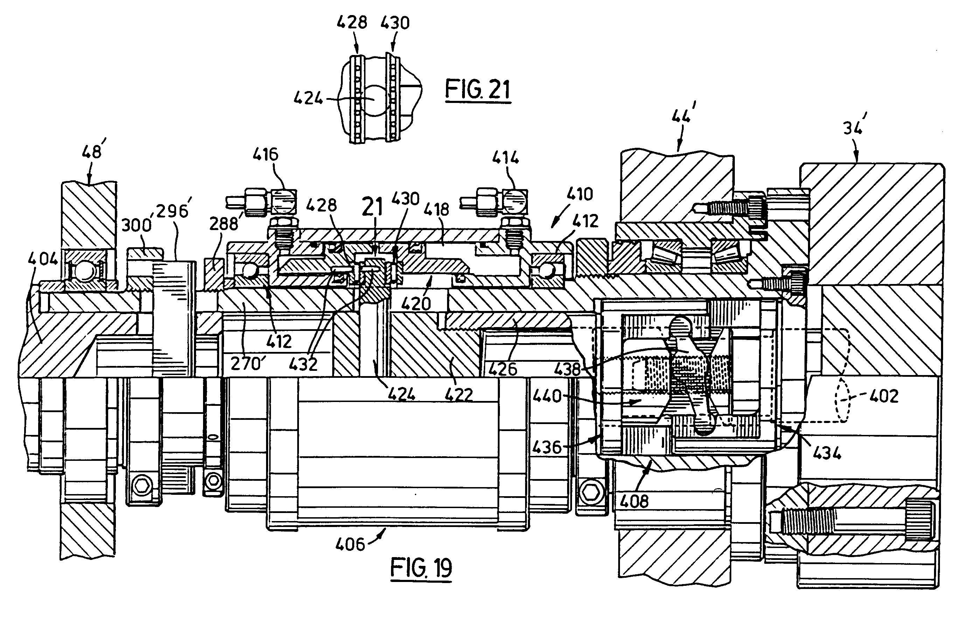

Reference will now be made to Figs. 19 to 24 in describing an alternative form of spindle assembly that may be used in the machine provided by the invention. The assembly incorporates a combined hydraulic/mechanical arrangement for actuating the chuck of the spindle. Certain components of the spindle assembly are similar to components that have been described previously primarily in connection with Fig. 7 and primed reference numerals have therefore been used to denote parts that correspond with parts described previously.

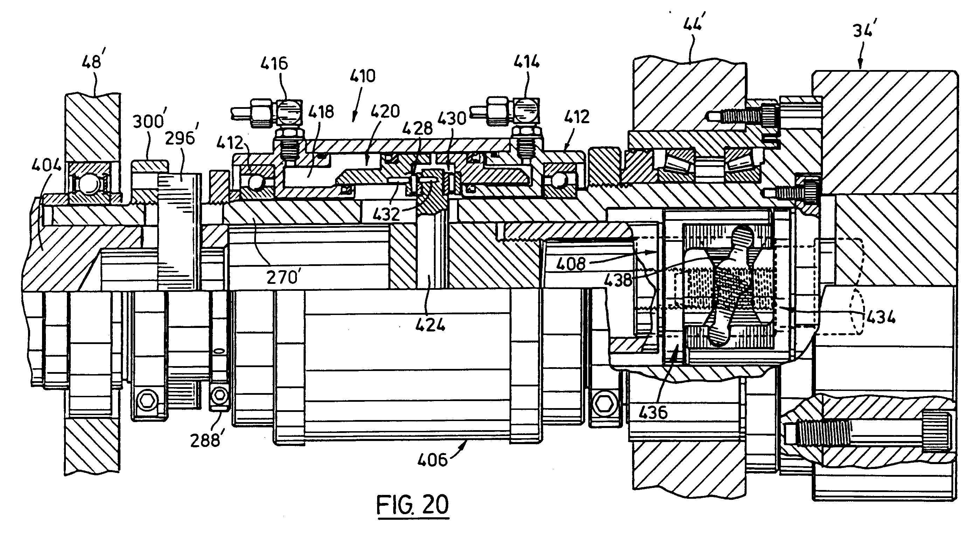

As in the embodiment of Fig. 7, the spindle assembly is supported between respective plates 44ʹ and 48ʹ of the carrier of the machine by bearings. A chuck 34ʹ is shown at the right-hand end of the spindle as drawn and has jaws (not shown) that are actuated by a shaft or push rod indicated in ghost outline in Figs. 19 and 20 at 402. The push rod operates the jaws of the chuck in conventional fashion (not shown). Drive is transmitted to the chuck through a main cylindrical body member 270ʹ of the spindle from an input drive shaft 404 at the left-hand end of the spindle as drawn. A transverse pin 296ʹ connects the drive shaft 404 to the body member 270ʹ as described previously and is located between respective nuts 300ʹ and 288ʹ. As in the preceding embodiment, pin 296ʹ transmits drive from the shaft 404 to the chuck. The chuck and associated components can be separated from the remainder of the spindle after removing pin 296ʹ.

Axial movement of the chuck operating push rod 402 is effected by means of a hydraulic actuator 406 through the intermediary of a mechanical shuttle assembly 408 that imparts a mechanical advantage; that is, assembly 408 in effect amplifies the force generated by the hydraulic actuator 406.

Actuator 406 includes a stationary housing 410 that is supported on the main body member 270 by bearings 412. Hydraulic fluid couplings 414, 416 on housing 410 communicate with an hydraulic chamber or cylinder 418 inside the housing. Chamber 418 receives an annular piston 420 that is slidable in housing 410 in the axial direction of the spindle from the position in which it is shown in Fig. 19 at the left-hand end of the housing as drawn to the right-hand position shown in Fig. 20. Movement of the piston is of course effected by selectively delivering hydraulic fluid to the relevant one of the couplings 414, 416.

Movement of the piston between its end positons is transmitted to a block or plug 422 within the cylindrical body member 270ʹ of the spindle by a transverse pin 424 that extends through the block and is coupled to the piston at its ends (only one of which is shown). Block 422 is threaded into an end of a sleeve 426 that is mounted for axial sliding movement within body member 270ʹ and which is coupled to the shuttle assembly 408 as will be described.

Referring back to the piston 420, it will be appreciated that the piston and the associated housing 410 remains stationary while the body member 270 rotates during machining. Pin 424 must therefore be capable of turning about the longitudinal axis of the spindle, with respect to the piston, as body member 270ʹ turns. This is accomplished by locating the respective ends of the pin 424 with respect to the piston by respective needle bearing assemblies 428 and 430 on opposite sides of the pin. Each assembly comprises respective inner and outer races, the outer one of which is secured to the piston while the inner race is secured to the pin 424, with rollers between the races that are disposed with their axes radial to the longitudinal axis of the spindle. The respective races are "staked" to the pin and piston respectively by stakes indicated at 432 in the case of bearing 428.

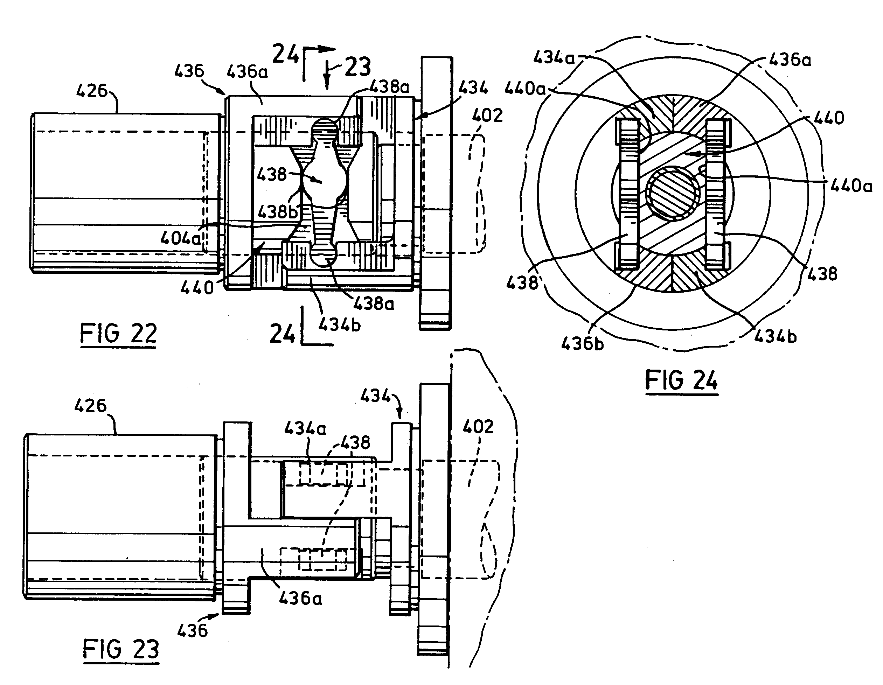

Fig. 21 shows the arrangement in plan and it will be seen that the pin 424 has flats at opposite sides which receive the inner races of the respective bearings. In summary, the arrangement described permits the pin 424 to turn about the longitudinal axis of the spindle while transitting axial movement of the piston 420 to the shuttle assembly 408. A comparison of Figs. 19 and 20 will show the positions of the components of the spindle assembly with the piston 420 of the chuck actuator in respective left- and right-hand positions.

Figs. 22 to 24 show the shuttle assembly 408 in detail. The principal components of the assembly are a fixed "shell" or "cup" 434 and a similar but movable shell or cup 436 which is coupled the sleeve 426 that is displaced axially by movement of the chuck actuating piston (see Figs. 19 and 20). The two shells 434 and 436 are connected by a pair of pivoted links 438 that extend through slots in a shuttle 440 connected to the chuck actuating push rod 402 (see Figs. 19 and 20). The two shells have respective top limbs 434a and 436a that lie side-by-side in sliding contact as best seen in Fig. 23, and respective bottom limbs 434b and 436b that are similarly arranged. As best seen in Fig. 24, the top and bottom limbs of the same shell are offset to opposite sides of a vertical centre line through the spindle as seen in cross-section. In other words, the top limb of one shell is disposed above the bottom limb of the other shell as seen in transverse section through the spindle (Fig. 24). The links 438 couple the top limb of one shell to the bottom limb of the other and the links are at the same time pivotally located within the shuttle 440 as best seen in Fig. 22.

Rounded enlargements 438a at the ends of the links are received in generally complimentary seats in the respective shells while each link is enlarged at a position above the centre of its length to provide convex pivot surfaces 438b that engage corresponding surfaces in recesses 440a in the shuttle that allow the links to pivot on the surfaces 438b. The fact that these enlargements are above the centre of the links means that a mechanical advantage is achieved. Thus, axial movement of the movable shell 436 in response to movement of piston 420 (Figs. 19 and 20) will cause the links 438 to pivot on the fixed shell 434, causing the shuttle 440 to move as a consequence of the pivotal movement of the links. It will be appreciated that the links in effect act as levers and that the arrangement achieves a mechanical advantage in terms of the force transmitted to the chuck from the piston 420.

It should be noted that references in the preceding description to "top" and "bottom" refer to the orientation of the parts as shown in the drawings and that the shuttle assembly will rotate in use and may adopt any one of an infinite number of angular positions about the longitudinal axis of the spindle.

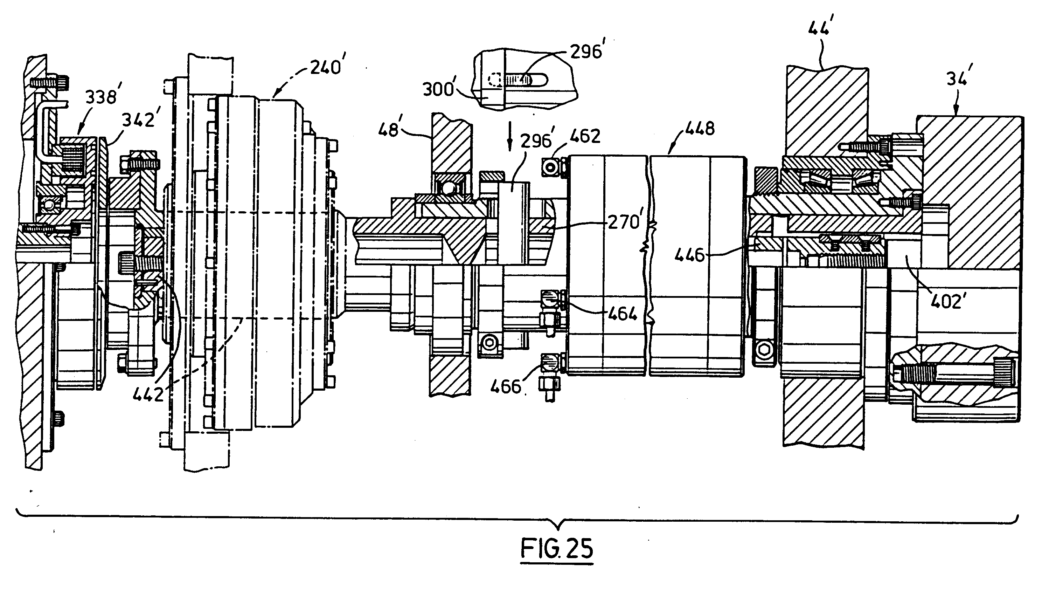

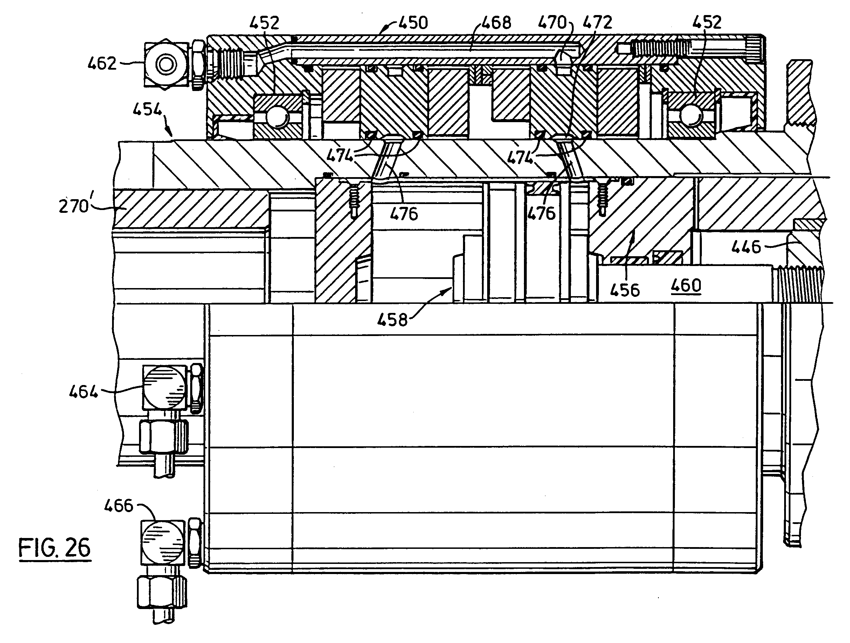

Reference will finally be made to Figs. 25 and 26 in describing a further alternative form of spindle. Again, primed reference numerals will be used to denote parts shown in previous views.

Fig. 25 shows an electromagnetic clutch assembly 338ʹ similar to the assembly shown in Fig. 14. Drive is transmitted from clutch plate 342ʹ to a drive shaft 442 that may be an input shaft to a transmission 240ʹ. The transmission is shown in ghost outline only since it is an optional component; the transmission may be omitted and the shaft 442 continued as a plain drive transmitting shaft as indicated in dotted outline. To the right of the transmission as shown in Fig. 25, shaft 442 either continues as the same shaft (where there is no transmission) or as an output shaft from the transmission. Shaft 442 is then coupled by a pin 296 to a cylindrical member 270ʹ forming the main drive coupling to the chuck 34ʹ as described previously. The chuck has an actuating push rod 402ʹ that is axially displaced to operate the jaws of the chuck by a sleeve 446 that is itself axially displaced by a chuck actuator shown generally at 448 in Fig. 25. The actuator is shown in partial section in Fig. 26, which will now be described.

Referring now to that view, a stationary housing 450 is mounted on the main body member 270ʹ on the spindle by way of bearings 452 that run on a sleeve 454 carried by member 270ʹ. A cylinder 456 within sleeve 454 has as a piston 458 having a piston rod 460 that is connected to the sleeve 446 shown in Fig. 25.

Housing 450 carries a series of hydraulic couplings 462, 464, 466 that communicate with hydraulic passageways and ports inside the housing. The passageways and ports for coupling 462 only have been shown and include a main passageway 468 that communicates with ports 470 communicating in turn with annular passageways 472 in sleeves that encircle the rotating sleeve 454. Ring seals 474 are provided to guard against leakage of hydraulic oil. These passageways 472 in turn communicate with ports 476 through sleeve 454 for delivering oil to and from the chamber formed by cylinder 456. Thus, by delivering hydraulic oil to appropriate ones of the ports 462, 464 and 466 and allowing it to exit from other ports, piston 458 is displaced from end-to-end in the cylinder, operating the chuck 34ʹ.

It will, of course, be understood that the preceding description relates to particular preferred embodiments of the invention only and that many modifications are possible within the broadest scope of the invention. For example, it will be understood that various features of the invention may be used independently of one another. For example, the feature of stationary individual drive motors for the spindles could be used with a carrier for indexing the spindles other than of the form specifically described.

Among other possible modifications are the fact that spindles of different forms could be used and that the number of stations provided in the machine may vary. Normally, the minimum number of stations would be two and the maximum eight but again there is not limitation to these particular numbers. Preferably, a loading/unloading station is provided because this allows loading the unloading to be carried out at other stations. However, again this is not essential; loading and unloading could be carried out simply by temporarily arresting one of the spindles at a normal machining station.

Spindles of the form provided by the invention may by used in other machine tools.

## Claims

1. A machine tool comprising:
a frame (20);
a plurality of spindles (22) each rotatable about an axis and each including a chuck (34) at a first end of the spindle;
a carrier (26) supporting said spindles (22) in axially parallel positions with said chuck (34) accessible at a first end of the carrier (26);
means (104) for indexing the carrier (26) about a main axis parallel to said spindle axes to move the spindles (22) between defined stations;
spindle drive means (28) supported by said frame (20) adjacent a second end of the carrier (26) and including a number of individual spindle drive motors each disposed in a fixed position aligned with one of said stations;
clutch means (30) comprising respective driven clutch members at a second end of each said spindle (22) and co-operable driving clutch member means drivably coupled to each spindle drive motor, said clutch means (30) being operable to drivingly couple each spindle drive motor to the relevant one of said spindles (22) when the carrier (26) has been indexed to bring that spindle to a said station at which a machining operation is to be performed, and being disengageable to permit indexing of the carrier,
locking means (128) being provided to act between said frame (20) and said carrier (26) and operable to lock the carrier (26) with respect to the frame (20) in each of a plurality of defined angular positions and precisely locate the spindles (22) at said stations,
characterized by a shaft (42) to support the carrier (26) for turning about said main axis, comprising spindle support means (44,46) coupled to said shaft (42) inwardly of its ends, and wherein the machine tool further comprises means (72,74) which supports the shaft on the frame (20) at positions outwardly of the carrier (26) for permitting turning of the carrier (26) about its main axis to index the spindles (22) between the said stations, the shaft (42) extending beyond said first end of the carrier (26) a distance sufficient to permit said indexing and machining of work pieces at machining stations without interference by said support means, each said spindle including transmission means (250) between said driven clutch member at the second end of the spindle and said chuck, said transmission means being adapted to provide a predetermined fixed speed transmission ratio between said driven clutch member and the chuck.

2. A machine tool as claimed in claim 1, wherein said stations between which the spindles are indexed include a loading/unloading station (ST1) at which a spindle can be brought to rest for loading and unloading of workpieces, and at least one machine station (ST2-ST4) at which a machining operation can be performed on a workpiece, and wherein the number of drive motors corresponds to the number of machining stations, there being no driven motor corresponding to said loading/unloading station.

3. A machine tool as claimed in claim 2 comprising brake means (32) supported by said frame adjacent said second end of the carrier and disposed in a fixed position aligned with said loading/unloading station, said brake means being adapted to engage and hold stationary a spindle at said loading/unloading station.

4. A machine tool as claimed in any preceding claim, wherein each said spindle drive motor is an infinitely variable electric motor, whereby the machining speed of a spindle driven by said motor can be infinitely varied accordingly to required machining conditions.

5. A machine tool as claimed in any preceeding claim, wherein said transmission means comprises a planteary gear transmission.

6. A machine tool as claimed in any preceding claim, wherein said clutch means (30) comprises an electromagnetic clutch associated with the or each spindle drive motor and including means adapted electromagnetically to couple said driving clutch member and the driven clutch member of any one of said spindles.

7. A machine tool as claimed in any preceding claim, wherein said carrier (26) includes said central shaft (42) defining the carrier axis, said spindle support means (44,46) supporting the spindles with the said chuck (34) exposed at a first end of the carrier; and
said spindle drive means supported by said frame adjacent to and externally of the second end of said carrier.

8. A machine tool as claimed in any preceding claim wherein said indexing means (104) comprises intermittent drive means (110) coupled to the shaft (42) adjacent to said second end of the carrier and adapted to intermittently turn the carrier (26) about its axis to index said spindles in accordance with the required operating mode of the machine tool, said locking means (128) adapted to lock the carrier (26) to said frame (20) when said intermittent drive means is not in operation.

9. A machine tool as claimed in claim 8, wherein said intermittent drive means comprises a motor driven drive shaft and mechanical means coupling said drive shaft and carrier central shaft, wherein said locking mean comprises at least one mechanical locking device between said frame and carrier, and wherein the indexing means further comprises a mechanical interlock (126,154) between said mechanical coupling means and said locking device adapted to release said device immediately prior to indexing of the carrier and re-engage said device immediately after said indexing has been completed.

10. A machine tool as claimed in claim 9, wherein said mechanical means coupling the motor driven drive shaft and carrier central shaft comprises a Geneva cam mechanism (110) comprising a hub carried by said carrier central shaft and including a plurality of cam tracks, and a driving cam follower driven from said shaft and adapted to engage in said cam tracks and intermittently rotate said hub in accordance with the required operating conditions of the machine tool.

11. A machine tool as claimed in claim 10, wherein said mechanical locking device comprises a latch device carried by said frame and including a latch bolt (134) engageable in one of a series of latch blocks (130) carried by said carrier at positions corresponding to locking of the carrier in said stations.

12. A machine tool as claimed in claim 7, wherein said spindle support means of the carrier comprise a series of plates spaced along said central shaft in planes generally at right angles to said carrier axis , said plates being formed with openings (50) receiving the spindles, said plates and shaft being made of steel and being welded together to form a rigid integral carrier structure.

13. A machine tool as claimed in any of claims 1 to 6, wherein said clutch means includes, in association with at least one of said spindle drive motors, first and second clutches comprising a friction clutch and a toothed clutch one of which includes said driven clutch member and a co-operable said driving clutch member.

14. A machine tool as claimed in claim 13, wherein said first and second clutches comprise said driving and driven clutch members and respective annular clutch plates concentrically arranged between said members one within the other, said plates comprising a friction clutch plate and a toothed clutch plate and being carried by one of said members for co-operation with the other said member, and means for selectively bringing said plates individually into co-operating relationship with the relevant said driving or driven clutch member.

15. A machine tool as claimed in any preceding claim, wherein each spindle includes workpiece holding means in the form of a mechanically actuable chuck, a chuck operating member that is disposed within the the spindle and is displaceable axially of the spindle to operate the chuck, chuck operating means comprising a piston and cylinder within the spindle connected to said chuck operating member, and means externally of the spindle for delivering hydraulic fluid to said cylinder for displacing the piston to operate the chuck.

16. A machine tool as claimed in any of claims 1 to 14, wherein each said spindle includes workpiece holding means in the form of a mechanically actuable chuck, a chuck operating member that is disposed within the spindle and is displaceably axially of the spindle to operate the chuck, and chuck operating means comprising a stationary housing mounted externally on the spindle and defining a cylinder, an annular piston within said cylinder, displaceable axially of the spindle, means for delivering hydraulic fluid to the cylinder to displace the piston, and means coupling said piston to said chuck operating member within the spindle.

17. A machine tool as claimed in claim 16, wherein said means coupling the piston to the chuck operating member includes a coupling element disposed within the spindle, said element being rotatable with the spindle and axially displaced with the piston, and a shuttle assembly connected between said element and said chuck operating member and arranged to provide a mechanical advantage in transmitting axial movement of said element to axial movement of said member.

## Patentansprüche

1. Werkzeugmaschine, welche umfaßt:
einen Rahmen (20);
eine Vielzahl von Spindeln (22), von denen jede um eine Achse rotierbar ist und jede ein Futter (34) an einem ersten Ende der Spindel aufweist;
ein Träger (26), der die genannten Spindeln (22) in achsparallelen Positionen trägt, wobei das genannte Futter (34) an einem ersten Ende des Trägers (26) zugänglich ist;
Mittel (104) zum Schalten des Trägers (26) um eine zu den genannten Spindel-Achsen parallele Hauptachse, um die Spindeln (22) zwischen definierten Stationen zu bewegen;
Spindel-Antriebsmittel (28), die durch den genannnten Rahmen (20) einem zweiten Ende des Trägers (26) benachbart getragen sind und eine Anzahl von individuellen Spindel-Antriebsmotoren umfassen, von denen ein jeder in einer festen Position angeordnet ist, die mit einer der genannten Stationen ausgerichtet ist;
Kupplungsmittel (30), welche jeweilige angetriebene Kupplungsglieder an einem zweiten Ende einer jeden Spindel (22) sowie zusammenwirkende, antreibende Kupplungsglieder-Mittel aufweisen, welche mit einem jeden Spindel-Antriebsmotor antreibbar gekuppelt sind, wobei die genannten Kupplungsmittel (30) betriebsfähig sind, um einen jeden Spindel-Antriebsmotor mit der zugehörigen einen der genannten Spindeln (22) antreibbar zu kuppeln, wenn der Träger (26) geschaltet worden ist, um diese Spindel zu einer genannten Station zu bringen, an welcher ein Bearbeitungsvorgang durchzuführen ist, und wobei die genannten Kupplungsmittel (30) ausrückbar sind, um ein Schalten des Trägers zu ermöglichen,
Blockierungsmittel (128), welche vorgesehen sind, um zwischen dem genannten Rahmen (20) und dem genannten Träger (26) zu wirken und welche betriebsfähig sind, um den Träger (26) in Bezug auf den Rahmen (20) in einer jeden von einer Vielzahl definierter Winkelpositionen zu blockieren und die Spindeln (22) in den genannten Stationen genau anzuordnen,
**gekennzeichnet durch** eine Welle (42) zum Tragen des Trägers (26), um diesen um die genannte Hauptachse zu drehen, wobei diese Welle Spindel-Trägermittel (44, 46) umfaßt, welche mit der genannten Welle (42) innerhalb deren Enden gekuppelt sind, und wobei die Werkzeugmaschine ferner Mittel (72, 74) aufweist, welche die Welle an dem Rahmen (20) an auswärtigen Positionen in Bezug auf den Träger (26)trägt, um ein Drehen des Trägers (26) um seine Hauptachse zu ermöglichen, um die Spindeln (22) zwischen den genannten Stationen weiterzuschalten, während sich die Welle (42) über das genannte erste Ende des Trägers (26) um eine Strecke hinaus erstreckt, welche ausreichend ist, um das genannte Schalten und ein Bearbeiten von Werkstücken in Bearbeitungsstationen zu ermöglichen, ohne daß sich die genannten Trägermittel gegenseitig beeinflussen oder stören, wobei eine jede Spindel Getriebe- oder Kraftübertragungsmittel (250) zwischen dem genannten angetriebenen Kupplungsglied an dem zweiten Ende der Spindel und dem genannten Futter aufweist, und wobei diese Kraftübertragungsmittel dazu befähigt sind, ein vorgegebenes festes Drehzahl-Übersetzungsverhältnis zwischen dem genannten angetriebenen Kupplungsglied und dem Futter zu ergeben.

2. Werkzeugmaschine, wie in Anspruch 1 beansprucht, bei welcher die genannten Stationen, zwischen denen die Spindeln weitergeschaltet werden, eine Belade-/Entladestation (ST1), an welcher eine Spindel zum Beladen und Entladen von Werkstücken zur Ruhe gebracht werden kann, sowie zumindest eine Bearbeitungsstation (ST2 - ST4) aufweisen, an welcher ein Bearbeitungsvorgang an einem Werkstück durchgeführt werden kann, wobei ferner die Anzahl der Antriebsmotoren der Anzahl der Bearbeitungsstationen entspricht und es keinen, der genannten Belade-/Entladestation entsprechender Antriebsmotor gibt.

3. Werkzeugmaschine, wie in Anspruch 2 beansprucht, welche Bremsmittel (32) aufweist, die an das zweite Ende des Trägers angrenzend durch den genannten Rahmen getragen und in Ausrichtung mit der genannten Belade-/Entladestation in einer festen Position angeordnet sind, wobei die genannten Bremsmittel dazu befähigt sind, in der genannten Belade-/Entladestation mit einer Spindel in Eingriff zu gelangen und diese unbeweglich zu halten.

4. Werkzeugmaschine, wie in einem der vorherigen Ansprüche beansprucht, bei welcher ein jeder Spindel-Antriebsmotor ein stufenlos regelbarer Elektromotor ist, wodurch die Bearbeitungsgeschwindigkeit einer durch den genannten Motor angetriebenen Spindel entsprechend den geforderten Bearbeitungsbedingungen stufenlos geregelt werden kann.

5. Werkzeugmaschine, wie in einem der vorhergehenden Ansprüche beansprucht, bei welcher die genannten Getriebe- oder Kraftübertragungsmittel ein Planetengetriebe aufweisen.

6. Werkzeugmaschine, wie in einem der vorhergehenden Ansprüche beansprucht, bei welcher die genannten Kupplungsmittel (30) eine elektromagnetische Kupplung aufweisen, die dem oder einem jeden Spindel-Antriebsmotor zugeordnet ist und Mittel umfaßt, welche dazu befähigt sind, das antreibende Kupplungsglied und das angetriebene Kupplungsglied von irgendeiner der genannten Spindeln elektromagnetisch zu kuppeln.

7. Werkzeugmaschine, wie in einem der vorhergehenden Ansprüche beansprucht, bei welcher der genannte Träger (26) umfaßt: die genannte, die Trägerachse definierende mittlere Welle (42), die genannten Spindel-Trägermittel (44, 46), welche die Spindeln tragen, wobei das genannte Futter (34) an einem ersten Ende des Trägers freiliegend ist, und die genannten Spindel-Antriebsmittel, die durch den genannten Rahmen angrenzend an das zweite Ende und außerhalb dieses zweiten Endes des genannten Trägers getragen sind.

8. Werkzeugmaschine, wie in einem der vorhergehenden Ansprüche beansprucht, bei welcher die genannten Schaltmittel (104) intermittierende Antriebsmittel (110) aufweisen, welche angrenzend an das zweite Ende des Trägers mit der Welle (42) gekoppelt sind und dazu befähigt sind, den Träger (26) um seine Achse intermittierend zu drehen, um die genannten Spindeln entsprechend der geforderten Bearbeitungsart der Werkzeugmaschine zu schalten, wobei die genannten Blockierungsmittel (128) dazu befähigt sind, den Träger (26) mit dem genannten Rahmen (20) zu verriegeln oder zu blockieren, wenn die genannten intermittierenden Antriebsmittel außer Betrieb sind.

9. Werkzeugmaschine, wie in Anspruch 8 beansprucht, bei welcher die genannten intermittierenden Antriebsmittel eine durch einen Motor angetriebene Antriebswelle sowie mechanische Mittel zum Kuppeln der genannten Antriebswelle und der mittleren Welle des Trägers aufweisen, die genannten Blockierungsmittel zumindest eine mechanische Verriegelungsvorrichtung zwischen dem genannten Rahmen und dem Träger aufweisen, und die Schaltmittel weiterhin zwischen den genannten mechanischen Kupplungsmitteln und der genannten Verriegelungsvorrichtung eine mechanische, gegenseitige Blockierung (126, 154) aufweisen, welche zum Freigeben der genannten Vorrichtung unmittelbar vor dem Schalten des Trägers und zum Wiedereinrücken der genannten Vorrichtung unmittelbar, nachdem das genannte Schalten vollendet worden ist, geeignet ist.

10. Werkzeugmaschine, wie in Anspruch 9 beansprucht, bei welcher die genannten mechanischen Mittel zum Kuppeln der durch einen Motor angetriebenen Antriebswelle und der mittleren Welle des Trägers ein Malteserkreuzgetriebe (110), welches eine durch die genannte mittlere Welle des Trägers getragene Nabe aufweist und eine Vielzahl von Nockenlaufbahnen umfaßt, sowie einen antreibenden Nockenstößel aufweisen, der durch die genannte Welle angetrieben wird und dazu befähigt ist, mit den genannten Nockenlaufbahnen in Eingriff zu gelangen und in Übereinstimmung mit den geforderten Betriebsbedingungen bzw. Betriebsarten der Werkzeugmaschine die genannte Nabe intermittierend in Rotation zu versetzen.

11. Werkzeugmaschine, wie in Anspruch 10 beansprucht, bei welcher die genannte mechanische Verriegelungsvorrichtung eine Einklink- oder Einrastvorrichtung aufweist, welche durch den genannten Rahmen getragen ist und einen Einklink- oder Einrastbolzen (134) umfaßt, der mit einem von einer Reihe von Einklink- oder Einrastblöcken (130) in Eingriff gelangen kann, welche durch den genannten Träger in Positionen getragen werden, die der Verriegelung des Trägers in den genannten Stationen entsprechen.

12. Werkzeugmaschine, wie in Anspruch 7 beansprucht, bei welcher die genannten Spindel-Trägermittel des Trägers eine Reihe von Platten aufweisen, welche entlang der genannten mittleren Welle in Ebenen voneinander beabstandet sind, die im wesentlichen unter rechten Winkeln zu der genannten Trägerachse verlaufen, wobei diese Platten mit die Spindeln aufnehmenden Öffnungen (50) ausgebildet sind und wobei die Platten und die Welle aus Stahl hergestellt und miteinander verschweißt sind, um eine starre, einstückige Trägerkonstruktion zu bilden.

13. Werkzeugmaschine, wie in einem der Ansprüche 1 bis 6 beansprucht, bei welcher die genannten Kupplungsmittel in Zuordnung zu wenigstens einem der genannten Spindel-Antriebsmotoren erste und zweite Kupplungen umfassen, die eine Reibungskupplung und eine verzahnte Kupplung aufweisen, wobei eine von diesen Kupplungen das genannte angetriebene Kupplungsglied und ein genanntes zusammenwirkendes, antreibendes Kupplungsglied umfaßt.

14. Werkzeugmaschine, wie in Anspruch 13 beansprucht, bei welcher die genannten ersten und zweiten Kupplungen die genannten antreibenden und angetriebenen Kupplungsglieder sowie jeweilige ringförmige Kupplungsplatten umfassen, die zwischen den genannten Gliedern, eine innerhalb der anderen, konzentrisch angeordnet sind, wobei diese Platten eine Reibungskupplungsplatte und eine verzahnte Kupplungsplatte aufweisen und durch eines der genannten Glieder zum Zusammenarbeiten mit dem anderen der genannten Glieder getragen werden und wobei Mittel vorgesehen sind, um die genannten Platten einzeln und selektiv in eine zusammenarbeitende Beziehung mit dem entsprechenden antreibenden oder angetriebenen Kupplungsglied zu bringen.

15. Werkzeugmaschine, wie in einem der vorhergehenden Ansprüche beansprucht, bei welcher eine jede Spindel aufweist: Werkstück-Aufspannmittel in der Form eines mechanisch betätigbaren Futters, ein Futter-Betätigungselement, welches innerhalb der Spindel angeordnet ist und in Axialrichtung der Spindel verschiebbar ist, um das Futter zu betätigen, Futter-Betätigungsmittel, welche einen Kolben sowie einen innerhalb der Spindel mit dem genannten Futter-Betätigungselement verbundenen Zylinder aufweisen, sowie außerhalb der Spindel befindliche Mittel zum Liefern oder Abgeben einer Hydraulikflüssigkeit zu dem genannten Zylinder, um den Kolben zum Zwecke der Betätigung des Futters zu verschieben.

16. Werkzeugmaschine, wie in einem der Ansprüche 1 bis 14 beansprucht, bei welcher eine jede Spindel aufweist: Werkstück-Aufspannmittel in der Form eines mechanisch betätigbaren Futters, ein Futter-Betätigungselement, welches innerhalb der Spindel angeordnet ist und in Axialrichtung der Spindel verschiebbar ist, um das Futter zu betätigen, sowie Futter-Betätigungsmittel, welche aufweisen: ein feststehendes, außerhalb der Spindel angebrachtes und einen Zylinder definierendes Gehäuse, einen ringförmigen Kolben innerhalb dieses Zylinders, wobei dieser Kolben in Axialrichtung der Spindel verschiebar ist, Mittel zum Liefern oder Abgeben einer Hydraulikflüssigkeit zu dem Zylinder, um den Kolben zu verschieben, sowie Mittel zum Kuppeln des genannten Kolbens mit dem genannten Futter-Betätigungselement innerhalb der Spindel.

17. Werkzeugmaschine, wie in Anspruch 16 beansprucht, bei welcher die genannten Mittel zum Kuppeln des Kolbens mit dem Futter-Betätigungselement aufweisen: ein Kupplungselement, welches innerhalb der Spindel angeordnet ist, wobei dieses Element zusammen mit der Spindel rotierbar und zusammen mit dem Kolben in Axialrichtung verschiebbar ist, sowie eine hin- und hergehende bzw. Pendel-Anordnung, welche eine Verbindung zwischen dem genannten Kupplungselement und dem genannten Futter-Betätigungselement bildet und so angeordnet ist, um eine mechanische Kraftverstärkung bei der Übertragung der Axialbewegung des genannten Kupplungselementes auf die axiale Bewegung des genannten Futter-Betätigungselementes zu ergeben.

## Revendications

1. Machine-outil comprenant :
un bâti (20),
plusieurs broches (22) destinées chacune à tourner autour d'un axe et comprenant chacune un mandrin (34) placé à une première extrémité de la broche,
un plateau (26) supportant les broches (22) afin qu'elles aient des positions axialement parallèles, le mandrin (34) étant accessible à une première extrémité du plateau (26),
un dispositif (104) de positionnement du plateau (26) autour d'un axe principal parallèle aux axes des broches afin que les broches (22) soient déplacées entre des postes déterminés,
un dispositif (28) d'entraînement de broches supporté par le bâti (20) près d'une seconde extrémité du plateau (26) et comprenant un certain nombre de moteurs individuels d'entraînement de broche disposés chacun en position fixe alignée sur l'un des postes,
un dispositif (30) d'embrayage comprenant des organes respectifs menés d'embrayage placés à une seconde extrémité de chaque broche (22) et un dispositif à organe menant coopérant d'embrayage couplé à chaque moteur d'entraînement de broche afin qu'il soit entraîné, le dispositif à embrayage (30) étant destiné à coupler chaque moteur d'entraînement de broche à la broche correspondante (22) lorsque le plateau (26) a été positionné afin que cette broche soit mise à un poste auquel une opération d'usinage doit être réalisée, et pouvant être séparée afin que le positionnement du plateau soit réalisé, et
un dispositif de blocage (128) étant destiné à agir entre le bâti (20) et le plateau (26) et étant destiné à bloquer le plateau (26) par rapport au bâti (20) dans chacune de plusieurs positions angulaires déterminées et à positionner avec précision les broches (22) auxdits postes,
caractérisé par un arbre (42) destiné à supporter le plateau (26) afin qu'il tourne autour de l'axe principal, et comprenant un dispositif (44, 46) de support de broches couplé à l'arbre (42) vers l'intérieur de ses extrémités, et la machine-outil comporte en outre un dispositif (72, 74) qui supporte l'arbre sur le bâti (20) à des positions qui dont à l'extérieur du plateau (26) afin que le plateau (26) puisse tourner autour de son axe principal et positionne les broches (22) entre les postes, l'arbre (42) étant disposé au-delà de la première extrémité du plateau (26) sur une distance suffisante pour qu'il permette le positionnement et l'usinage de pièces au poste d'usinage sans gêne due au dispositif de support, chaque broche ayant un dispositif de transmission (250) placé entre l'organe mené d'embrayage à la seconde extrémité de la broche et le mandrin, le dispositif de transmission étant destiné à donner un rapport fixe prédéterminé de transmission de vitesse entre l'organe mené d'embrayage et le mandrin.

2. Machine-outil selon la revendication 1, dans laquelle lesdits postes entre lesquels les broches sont positionnées comprennent un poste de chargement-déchargement (ST1) auquel une broche peut être mise au repos pour le chargement et le déchargement de pièces, et au moins un poste d'usinage (ST2-ST4) auquel une opération d'usinage peut être réalisée sur une pièce, et dans laquelle le nombre de moteurs d'entraînement correspond au nombre de postes d'usinage, aucun moteur d'entraînement ne correspondant au poste de chargement-déchargement.

3. Machine-outil selon la revendication 2, comprenant un dispositif de freinage (32) supporté par le bâti près de la seconde extrémité du plateau et placé en position fixe alignée sur le poste de chargement-déchargement, le dispositif de freinage étant destiné à venir au contact d'une broche et à maintenir celle-ci fixe au poste de chargement-déchargement.

4. Machine-outil selon l'une quelconque des revendications précédentes, dans laquelle chaque moteur d'entraînement de broches est un moteur électrique à variation continue de vitesse, si bien que la vitesse d'usinage de la broche entraînée par le moteur peut subir une variation continue en fonction des conditions nécessaires d'usinage.

5. Machine-outil selon l'une quelconque des revendications précédentes, dans laquelle le dispositif de transmission comporte une transmission à pignons satellites.

6. Machine-outil selon l'une quelconque des revendications précédentes, dans laquelle le dispositif d'embrayage (30) comprend un embrayage électromagnétique associé au moteur ou à chaque moteur d'entraînement de broches, et comprenant un dispositif destiné à coupler électromagnétiquement l'organe menant d'embrayage et l'organe mené d'embrayage de l'une quelconque des broches.

7. Machine-outil selon l'une quelconque des revendications précédentes, dans laquelle le plateau (26) possède un arbre central (42) qui détermine l'axe du plateau, le dispositif (44, 46) de support de broches supportant les broches avec le mandrin (34) exposé à une première extrémité du plateau, et
le dispositif d'entraînement de broches est supporté par le bâti près de la seconde extrémité du plateau et à l'extérieur de cette seconde extrémité.

8. Machine-outil selon l'une quelconque des revendications précédentes, dans laquelle le dispositif de positionnement (104) comprend un dispositif (110) d'entraînement intermittent couplé à l'arbre (42) près de la seconde extrémité du plateau et destiné à faire tourner par intermittence le plateau (26) autour de son axe afin que les broches soient positionnées d'après le mode nécessaire de fonctionnement de la machine-outil, le dispositif de blocage (128) étant destiné à bloquer le plateau (26) sur le bâti (20) lorsque le dispositif d'entraînement intermittent n'est pas en fonctionnement.

9. Machine-outil selon la revendication 8, dans laquelle le dispositif d'entraînement intermittent comporte un arbre d'entraînement entraîné par un moteur et un dispositif mécanique couplant l'arbre d'entraînement et l'arbre central du plateau, dans laquelle le dispositif de blocage comprend au moins un dispositif mécanique de blocage placé entre le bâti et le plateau, et dans laquelle le dispositif de positionnement comporte en outre un mécanisme à action solidarisée (126, 154) placé entre le dispositif d'accouplement mécanique et le dispositif de blocage et destiné à libérer le dispositif de blocage juste avant le positionnement du plateau et à remettre en fonctionnement le dispositif de blocage juste après la fin du positionnement.

10. Machine-outil selon la revendication 9, dans laquelle le dispositif mécanique couplant l'arbre d'entraînement qui est entraîné par le moteur et l'arbre central du plateau comprend un mécanisme (110) à croix de Malte ayant un moyeu porté par l'arbre central du plateau et comprenant plusieurs voies de came, et un toucheau menant de came entraîné par l'arbre et destiné à venir au contact des voies de came et à faire tourner par intermittence le moyeu en fonction des conditions nécessaires de fonctionnement de la machine-outil.

11. Machine-outil selon la revendication 10, dans laquelle le dispositif de blocage mécanique comprend un dispositif de verrouillage porté par le bâti et comprenant un verrou (134) destiné à pénétrer dans un bloc (130) de verrouillage d'une série de blocs de verrouillage portés par le plateau à des positions correspondant au blocage du plateau auxdits postes.

12. Machine-outil selon la revendication 7, dans laquelle le dispositif de support de broches du plateau comprend une série de plaques espacées le long de l'arbre central dans des plans qui sont perpendiculaires de façon générale à l'axe du plateau, les plaques étant formées avec des ouvertures (50) destinées à loger les broches, les plaques et l'arbre étant formés d'acier et étant soudés mutuellement pour la formation d'une structure rigide en une seule pièce du plateau.

13. Machine-outil selon l'une quelconque des revendications 1 à 6, dans laquelle le dispositif d'embrayage comprend, en association avec l'un au moins des moteurs d'entraînement de broches, un premier et un second embrayage ayant un embrayage à friction et un embrayage à dents, dont l'un comprend l'organe mené d'embrayage et un organe menant coopérant d'embrayage.

14. Machine-outil selon la revendication 13, dans laquelle le premier et le second embrayage sont l'organe mené et l'organe menant d'embrayage et des plaques annulaires respectives d'embrayage, disposées concentriquement entre les organes l'une dans l'autre, les plaques comprenant un plateau d'embrayage à friction et un plateau d'embrayage à dents et étant portées par l'un des organes pour coopérer avec l'autre des organes, et un dispositif destiné à mettre sélectivement les plateaux d'embrayage individuellement en position de coopération avec l'organe menant ou mené correspondant d'embrayage.

15. Machine-outil selon l'une quelconque des revendications précédentes, dans laquelle chaque broche comprend un dispositif de maintien de pièces sous forme d'un mandrin commandé mécaniquement, un organe de manoeuvre de mandrin placé dans la broche et qui peut se déplacer sur l'axe de la broche afin qu'il commande le mandrin, un dispositif de manoeuvre de mandrin comprenant un piston et un cylindre placés dans la broche et raccordés à l'organe de manoeuvre de mandrin, et un dispositif placé à l'extérieur de la broche et destiné à transmettre un fluide hydraulique au cylindre afin qu'il déplace le piston qui commande le mandrin.

16. Machine-outil selon l'une quelconque des revendications 1 à 14, dans laquelle chaque broche comporte un dispositif de support de pièce sous forme d'un mandrin qui peut être commandé mécaniquement, un organe de manoeuvre de mandrin placé dans la broche et qui peut se déplacer suivant l'axe de la broche afin qu'il manoeuvre le mandrin, un dispositif de manoeuvre de mandrin comprenant un boîtier fixe monté à l'extérieur sur la broche et délimitant un cylindre, un piston annulaire placé dans le cylindre et mobile suivant l'axe de la broche, un dispositif destiné à transmettre du fluide hydraulique au cylindre afin qu'il déplace le piston, et un dispositif assurant l'accouplement du piston à l'organe de manoeuvre de mandrin à l'intérieur de la broche.

17. Machine-outil selon la revendication 16, dans laquelle le dispositif d'accouplement du piston à l'organe de manoeuvre de mandrin comprend un élément d'accouplement placé dans la broche, l'élément pouvant tourner avec la broche et pouvant être déplacé axialement avec le piston, et un ensemble à navette raccordé entre l'élément et l'organe de manoeuvre de mandrin et destiné à donner un facteur mécanique de multiplication pour la transformation du mouvement axial de l'élément en un mouvement axial de l'organe.
